# EUROPEAN PATENT APPLICATION

(11) **EP 2 943 014 A1**
(43) Date of publication of application: **11.11.2015**
(21) Application number: 13869882.4
(22) Date of filing: 04.01.2013
(51) Int. Cl.: H04W 48/08

(54) **METHOD, DEVICE AND SYSTEM FOR PACKET GATEWAY SELECTION**

(71) Applicant: Huawei Technologies Co., Ltd., Longgang District Shenzhen, Guangdong 518129 (CN)
(72) Inventor: YU, Youyang, Shenzhen Guangdong 518129 (CN); LI, Huan, Shenzhen Guangdong 518129 (CN)
(74) Representative: Thun, Clemens
(86) International application number: PCT/CN2013/070010
(87) International publication number: WO 2014/106318

(57) **Abstract**

A method for selecting a PDN gateway PGW is disclosed. The method includes: receiving, by a 3GPP AAA server, a request type indication sent by a PDN gateway PGW, where the request type indication is used for indicating a type of a procedure executed by a user equipment UE or is used for indicating whether an IP address is preserved; and selecting, by the 3GPP AAA server, a target PGW according to the request type indication. Embodiments of the present invention further provide a 3GPP AAA server, a PDN gateway PGW, and a user equipment. By adopting the embodiments of the present invention, a dynamic adjustment of a PGW can be implemented, and an unnecessary PGW reselection procedure is avoided.

## Description

### TECHNICAL FIELD

The present invention relates to the field of communications technologies, and in particular, to a method and a system for selecting a PDN gateway PGW, and a 3GPP AAA server, a PGW, a user equipment.

### BACKGROUND

Anew 3GPP (The 3rd Generation Partnership Project, the 3rd Generation Partnership Project) core network EPC (Evolved Packet Core Network, evolved packet core network) mainly includes three logical function entities: an MME (Mobility Management Entity, mobility management entity), an SGW (Serving Gateway, serving gateway), and a PGW (PDN Gateway, PDN gateway). As an outlet to an external network, the PGW not only supports a 3GPP access technology but also supports a non-3GPP access technology, and especially serves as a global mobility anchor in a mobile handover process.

Non-3GPP access networks can be classified into trusted (Trusted) access networks and untrusted (Untrusted) access networks. For an untrusted access network, a UE (User Equipment, terminal device) first needs to establish an IPSec (Internet Protocol Security, security tunnel) to an ePDG (Evolved Packet Data Gateway, evolved packet data gateway); while a trusted access network does not need an ePDG, and a UE can directly connect to a PGW by using an access network device.

While a UE is moving, service continuity of the UE may be ensured by relying on the network side or maintained by the UE itself. When a UE performs maintenance itself, the UE and a PGW communicate with each other over an S2c interface based on the DSMIPv6 (Dual-Stack MIPv6, dual-stack mobile IPv6) protocol.

In the prior art, when a UE accesses to a non-3GPP network, if user subscription data includes an identifier of a dynamic PGW, the UE must establish a connection to the dynamic PGW no matter what procedure the UE executes, but the dynamic PGW may not be a suitable target PGW. For example, when the UE executes an initial attach procedure, the UE may not be able to select a more optimal PGW if a dynamic PGW is selected.

### SUMMARY

The present invention provides a 3GPP AAA (Authentication, Authorization, and Accounting, Authentication, Authorization, and Accounting) server, a PDN gateway PGW, and a user equipment, and a method for selecting a PDN gateway PGW, to implement a dynamic adjustment of a PGW and prevent an unnecessary PGW reselection procedure.

A first aspect provides a method for selecting a PDN gateway PGW. The method includes: receiving, by a 3GPP AAA server, a request type indication sent by a PDN gateway PGW, where the request type indication is used for indicating a type of a procedure executed by a user equipment UE or is used for indicating whether an IP (Internet Protocol, Internet protocol) address is preserved; and selecting, by the 3GPP AAA server, a target PGW according to the request type indication.

In a first possible implementation manner of the first aspect, the selecting a target PGW according to the request type indication includes: when the request type indication is used for indicating that the type of the procedure executed by the UE is a handover procedure, and an identifier of a dynamic PGW included in user subscription data delivered by an HSS (Home Subscriber Service, home subscriber server) is different from an identifier of the PGW, selecting the dynamic PGW as the target PGW; or when the request type indication is used for indicating that the IP address is preserved, and an identifier of a dynamic PGW included in user subscription data delivered by a home subscriber server HSS is different from an identifier of the PGW, selecting the dynamic PGW as the target PGW.

In a second possible implementation manner of the first aspect, the selecting a target PGW according to the request type indication includes: when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

With reference to the second possible implementation manner of the first aspect, in a third possible implementation manner of the first aspect, the selecting a PGW nearest to the UE as the target PGW includes: determining position relationships between the UE and a plurality of PGWs according to a CoA (Care-Of Address, care-of address) IP of the UE and identifier information of the plurality of PGWs, and selecting the PGW nearest to the UE.

With reference to the second or third possible implementation manner of the first aspect, in a fourth possible implementation manner of the first aspect, the method further includes: when the target PGW is different from the PGW, sending, by the 3GPP AAA server, the target PGW to a home subscriber server HSS.

With reference to any one of the foregoing possible implementation manners of the first aspect, in a fifth possible implementation manner of the first aspect, the method further includes: when the target PGW is different from the PGW, sending a PGW reselection indication and an identifier of the target PGW to the PGW.

A second aspect provides a method for selecting a PDN gateway PGW. The method includes: determining, by a PDN gateway PGW, a request type indication, where the request type indication is used for indicating a type of a procedure executed by a user equipment UE or is used for indicating whether an IP address is preserved, and the request type indication is used for a 3GPP AAA server to select a target PGW; and sending, by the PGW, the request type indication to the 3GPP AAA server.

In a first possible implementation manner of the second aspect, the method further includes: receiving, by the PGW, a request message, where the request message includes an IPSec tunnel establishment request message sent by the UE or a session establishment request message sent by an access network device; and the determining, by a PGW, a request type indication includes: determining, by the PGW, the request type indication according to whether the request message carries a handover indication or an IP address of the UE.

With reference to the first possible implementation manner of the second aspect, in a second possible implementation manner of the second aspect, the determining, by the PGW, the request type indication according to whether the request message carries a handover indication or the IP address of the UE includes: when the request message carries the IP address of the UE or carries the handover indication, setting a value of the request type indication to handover; or when the request message does not carry the IP address of the UE or does not carry the handover indication, setting a value of the request type indication to initial attach or initial request; or when the request message carries the IP address of the UE or carries the handover indication, setting a value of the request type indication to IP address preservation; or when the request message does not carry the IP address of the UE or does not carry the handover indication, setting a value of the request type indication to IP address un-preservation.

With reference to any one of the possible implementation manners of the second aspect, in a third possible implementation manner of the second aspect, the method further includes: receiving, by the PGW, a PGW reselection indication and an identifier of the target PGW which are sent by the 3GPP AAA server, and sending the identifier of the target PGW to the UE.

A third aspect provides a method for selecting a PDN gateway PGW. The method includes: receiving, by a 3GPP AAA server, indication information that a user equipment UE supports selection from a plurality of PGWs, where the indication information is used for indicating that the UE can select a PGW according to an executed procedure; and sending an identifier of a PGW and a request type indication to the UE, where the request type indication is used for indicating a procedure type for which the PGW can be used.

In a first possible implementation manner of the third aspect, the PGW is a dynamic PGW included in user subscription data, and the request type indication is used for indicating a handover procedure type; or the PGW is a static PGW included in user subscription data, and the request type indication is used for indicating a handover procedure type; or the PGW is a PGW selected according to operator configuration information, and the request type indication is used for indicating an initial attach procedure type; or the PGW is a static PGW included in user subscription data, and the request type indication is used for indicating an initial attach type.

With reference to the first possible implementation manner of the third aspect, in a second possible implementation manner of the third aspect, the PGW selected according to the operator configuration information is a PGW nearest to the UE or a PGW with lowest load.

With reference to the second possible implementation manner of the third aspect, in a third possible implementation manner of the third aspect, the PGW nearest to the UE is: the PGW which is nearest to the UE and selected based on position relationships, which are determined according to a care-of address CoA IP of the UE and identifier information of a plurality of PGWs, between the UE and the plurality of PGWs.

A fourth aspect provides a method for selecting a PDN gateway PGW. The method includes: sending, by a user equipment UE, indication information that the UE supports selection from a plurality of PGWs, where the indication information is used for indicating that the UE can select a PGW according to an executed procedure; receiving, by the UE, an identifier of a PGW and a request type indication, where the request type indication is used for indicating a procedure type for which the PGW can be used; and when a type of a procedure executed by the UE is the procedure type indicated by the request type indication, selecting the PGW.

In a first possible implementation manner of the fourth aspect, the request type indication is used for indicating a handover procedure type; or the request type indication is used for indicating an initial attach type.

A fifth aspect provides a 3GPP AAA server. The 3GPP AAA server includes: a first receiver, configured to receive a request type indication sent by a PDN gateway PGW, where the request type indication is used for indicating a type of a procedure executed by a user equipment UE or is used for indicating whether an IP address is preserved; and a first processor, configured to select a target PGW according to the request type indication.

In a first possible implementation manner of the fifth aspect, the selecting, by the first processor, a target PGW according to the request type indication includes: when the request type indication is used for indicating that the type of the procedure executed by the UE is a handover procedure, and an identifier of a dynamic PGW included in user subscription data delivered by a home subscriber server HSS is different from an identifier of the PGW, selecting the dynamic PGW as the target PGW; or when the request type indication is used for indicating that the IP address is preserved, and an identifier of a dynamic PGW included in user subscription data delivered by a home subscriber server HSS is different from an identifier of the PGW, selecting the dynamic PGW as the target PGW.

In a second possible implementation manner of the fifth aspect, the selecting, by the first processor, a target PGW according to the request type indication includes: when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

With reference to the second possible implementation manner of the fifth aspect, in a third possible implementation manner of the fifth aspect, the selecting, by the first processor, a PGW nearest to the UE as the target PGW includes: determining position relationships between the UE and a plurality of PGWs according to a care-of address CoA IP of the UE and identifier information of the plurality of PGWs, and selecting the PGW nearest to the UE.

With reference to the second or third possible implementation manner of the fifth aspect, in a fourth possible implementation manner of the fifth aspect, the 3GPP AAA server further includes: a first transmitter, configured to send the target PGW to a home subscriber server HSS when the target PGW is different from the PGW.

With reference to any one of the foregoing possible implementation manners of the fifth aspect, in a fifth possible implementation manner of the fifth aspect, the 3GPP AAA server further includes: a second transmitter, configured to send a PGW reselection indication and an identifier of the target PGW to the PGW when the target PGW is different from the PGW.

A sixth aspect provides a PDN gateway PGW. The PDN gateway PGW includes: a second processor, configured to determine a request type indication, where the request type indication is used for indicating a type of a procedure executed by a user equipment UE or is used for indicating whether an IP address is preserved, and the request type indication is used by a 3GPP AAA server to select a target PGW; and a third transmitter, configured to send the request type indication to the 3GPP AAA server.

In a first possible implementation manner of the sixth aspect, the PGW further includes: a second receiver, configured to receive a request message, where the request message includes an IPSec tunnel establishment request message sent by the UE or a session establishment request message sent by an access network device; and the determining, by the second processor, a request type indication includes: determining the request type indication according to whether the request message carries a handover indication or the IP address of the UE.

With reference to the first possible implementation manner of the sixth aspect, in a second possible implementation manner of the sixth aspect, the determining, by the second processor, the request type indication according to whether the request message carries a handover indication or the IP address of the UE includes: when the request message carries the IP address of the UE or carries the handover indication, setting a value of the request type indication to handover; or when the request message does not carry the IP address of the UE or does not carry the handover indication, setting a value of the request type indication to initial attach or initial request; or when the request message carries the IP address of the UE or carries the handover indication, setting a value of the request type indication to IP address preservation; or when the request message does not carry the IP address of the UE or does not carry the handover indication, setting a value of the request type indication to IP address un-preservation.

With reference to any one of the possible implementation manners of the sixth aspect, in a third possible implementation manner of the sixth aspect, the PDN gateway PGW further includes: a third receiver, configured to receive a PGW reselection indication and an identifier of the target PGW which are sent by the 3GPP AAA server; and the third transmitter is further configured to send the identifier of the target PGW to the UE.

A seventh aspect provides a 3GPP AAA server. The 3GPP AAA server includes: a fourth receiver, configured to receive indication information that a user equipment UE supports selection from a plurality of PGWs, where the indication information is used for indicating that the UE can select a PGW according to an executed procedure; and a fourth transmitter, configured to send an identifier of a PGW and a request type indication to the UE, where the request type indication is used for indicating a procedure type for which the PGW can be used.

In a first possible implementation manner of the seventh aspect, the PGW is a dynamic PGW included in user subscription data, and the request type indication is used for indicating a handover procedure type; or the PGW is a static PGW included in user subscription data, and the request type indication is used for indicating a handover procedure type; or the PGW is a PGW selected according to operator configuration information, and the request type indication is used for indicating an initial attach procedure type; or the PGW is a static PGW included in user subscription data, and the request type indication is used for indicating an initial attach type.

With reference to the first possible implementation manner of the seventh aspect, in a second possible implementation manner of the seventh aspect, the PGW selected according to the operator configuration information is a PGW nearest to the UE or a PGW with lowest load.

With reference to the second possible implementation manner of the seventh aspect, in a third possible implementation manner of the seventh aspect, the PGW nearest to the UE is: the PGW which is nearest to the UE and selected based on position relationships, which are determined according to a care-of address CoA IP of the UE and identifier information of a plurality of PGWs, between the UE and the plurality of PGWs.

An eighth aspect provides a user equipment UE. The user equipment UE includes: a fifth transmitter, configured to send indication information that that the UE supports selection from a plurality of PGWs, where the indication information is used for indicating that the UE can select a PGW according to an executed procedure; a fifth receiver, configured to receive an identifier of a PGW and a request type indication, where the request type indication is used for indicating a procedure type for which the PGW can be used; and a third processor, configured to select the PGW when a type of a procedure executed by the UE is the procedure type indicated by the request type indication.

In a first possible implementation manner of the eighth aspect, the request type indication is used for indicating a handover procedure type; or the request type indication is used for indicating an initial attach type.

A ninth aspect provides a system for selecting a PDN gateway PGW. The system includes: a user equipment UE, a PDN gateway PGW, and a 3rd Generation Partnership Project Authentication, Authorization, and Accounting 3GPP AAA server, where the PGW is configured to determine a request type indication, where the request type indication is used for indicating a type of a procedure executed by the user equipment UE or is used for indicating whether an IP address is preserved, and the request type indication is used for the 3GPP AAA server to select a target PGW; and send the request type indication to the 3GPP AAA server; and the 3GPP AAA server is configured to receive the request type indication sent by the PGW; and select the target PGW according to the request type indication.

In a first possible implementation manner of the ninth aspect, the selecting, by the 3GPP AAA server, the target PGW according to the request type indication includes: when the request type indication is used for indicating that the type of the procedure executed by the UE is a handover procedure, and an identifier of a dynamic PGW included in user subscription data delivered by a home subscriber server HSS is different from an identifier of the PGW, selecting the dynamic PGW as the target PGW; or when the request type indication is used for indicating that the IP address is preserved, and an identifier of a dynamic PGW included in user subscription data delivered by a home subscriber server HSS is different from an identifier of the PGW, selecting the dynamic PGW as the target PGW.

In a second possible implementation manner of the ninth aspect, the selecting, by the 3GPP AAA server, the target PGW according to the request type indication includes: when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

With reference to the second possible implementation manner of the ninth aspect, in a third possible implementation manner of the ninth aspect, the selecting a PGW nearest to the UE as the target PGW includes: determining position relationships between the UE and a plurality of PGWs according to a care-of address CoA IP of the UE and identifier information of the plurality of PGWs, and selecting the PGW nearest to the UE.

With reference to the second and third possible implementation manners of the ninth aspect, in a fourth possible implementation manner of the ninth aspect, the 3GPP AAA server is further configured to send the target PGW to a home subscriber server HSS when the target PGW is different from the PGW.

With reference to any one of the foregoing possible implementation manners of the ninth aspect, in a fifth possible implementation manner of the ninth aspect, the 3GPP AAA server is further configured to send a PGW reselection indication and an identifier of the target PGW to the PGW when the target PGW is different from the PGW.

In a sixth possible implementation manner of the ninth aspect, the PGW is configured to receive a request message, where the request message includes an IPSec tunnel establishment request message sent by the user equipment UE or a session establishment request message sent by an access network device; and determine the request type indication according to whether the request message carries a handover indication or the IP address of the UE.

With reference to the sixth possible implementation manner of the ninth aspect, in a seventh possible implementation manner of the ninth aspect, the determining, by the PGW, the request type indication according to whether the request message carries a handover indication or the IP address of the UE includes: when the request message carries the IP address of the UE or carries the handover indication, setting a value of the request type indication to handover; or when the request message does not carry the IP address of the UE or does not carry the handover indication, setting a value of the request type indication to initial attach or initial request; or when the request message carries the IP address of the UE or carries the handover indication, setting a value of the request type indication to IP address preservation; or when the request message does not carry the IP address of the UE or does not carry the handover indication, setting a value of the request type indication to IP address un-preservation.

With reference to the sixth and seventh possible implementation manners of the ninth aspect, in an eighth possible implementation manner of the ninth aspect, the PGW is further configured to receive a PGW reselection indication and an identifier of the target PGW which are sent by the 3GPP AAA server; and send the identifier of the target PGW to the UE.

A tenth aspect provides a system for selecting a PDN gateway PGW. The system includes: a user equipment UE, a PDN gateway PGW, and a 3rd Generation Partnership Project Authentication, Authorization, and Accounting 3GPP AAA server, where the UE is configured to send indication information that the UE supports selection from a plurality of PGWs, where the indication information is used for indicating that the UE can select a PGW according to an executed procedure; the 3GPP AAA server is configured to receive the indication information that the UE supports selection from a plurality of PGWs; send an identifier of a PGW and a request type indication to the UE, where the request type indication is used for indicating a procedure type for which the PGW can be used; and the UE is configured to receive the identifier of the PGW and the request type indication; and select the PGW when a type of the procedure executed by the UE is the procedure type indicated by the request type indication.

In a first possible implementation manner of the tenth aspect, the PGW is a dynamic PGW included in user subscription data, and the request type indication is used for indicating a handover procedure type; or the PGW is a static PGW included in user subscription data, and the request type indication is used for indicating a handover procedure type; or the PGW is a PGW selected according to operator configuration information, and the request type indication is used for indicating an initial attach procedure type; or the PGW is a static PGW included in user subscription data, and the request type indication is used for indicating an initial attach type.

With reference to the first possible implementation manner of the tenth aspect, in a second possible implementation manner of the tenth aspect, the PGW selected according to the operator configuration information is a PGW nearest to the UE or a PGW with lowest load.

With reference to the second possible implementation manner of the tenth aspect, in a third possible implementation manner of the tenth aspect, the PGW nearest to the UE is: the PGW which is nearest to the UE and selected by determining, according to a care-of address CoA IP of the UE and identifier information of a plurality of PGWs, position relationships between the UE and the plurality of PGWs.

In the embodiments of the present invention, when receiving an authorization authentication request message sent by a PGW, a 3GPP AAA server determines, according to a request type indication carried in the authorization authentication request message, a procedure currently executed by a UE, decides that a PGW reselection procedure is to be performed, with reference to user subscription data delivered by an HSS, an identifier of the current PGW, operator configuration information, and the like, obtains an identifier of a target PGW needed for the reselection, and sends a PGW reselection indication and the identifier of the target PGW to the current PGW; and the PGW sends the identifier of the target PGW to the UE, so that the UE implements PGW selection. In this way, a dynamic adjustment of a PGW can be implemented in a trusted or untrusted access network, and an unnecessary PGW reselection procedure is avoided.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a flowchart of a method for selecting a PDN gateway PGW according to Embodiment 1 of the present invention;
FIG. 2 is a flowchart of a method for selecting a PDN gateway PGW according to Embodiment 2 of the present invention;
FIG. 3 is a signaling flowchart of a method for selecting a PDN gateway PGW according to Embodiment 3 of the present invention;
FIG. 4 is a signaling flowchart of a method for selecting a PDN gateway PGW according to Embodiment 4 of the present invention;
FIG. 5 is a structural diagram of a 3GPP AAA server according to Embodiment 1 of the present invention;
FIG. 6 is a structural diagram of a PDN gateway PGW according to Embodiment 1 of the present invention;
FIG. 7 is a flowchart of a method for selecting a PDN gateway PGW according to Embodiment 5 of the present invention;
FIG. 8 is a flowchart of a method for selecting a PDN gateway PGW according to Embodiment 6 of the present invention;
FIG. 9 is a signaling flowchart of a method for selecting a PDN gateway PGW according to Embodiment 7 of the present invention;
FIG. 10 is a signaling flowchart of a method for selecting a PDN gateway PGW according to Embodiment 8 of the present invention;
FIG. 11 is a structural diagram of a 3GPP AAA server according to Embodiment 2 of the present invention;
FIG. 12 is a structural diagram of a user equipment UE according to an embodiment of the present invention;
FIG. 13 is a structural diagram of a system for selecting a PDN gateway PGW according to Embodiment 1 of the present invention; and
FIG. 14 is a flowchart of a system for selecting a PDN gateway PGW according to Embodiment 2 of the present invention.

### DESCRIPTION OF EMBODIMENTS

Embodiments of the present invention provide a method and a system for selecting a PDN gateway PGW, and a 3GPP AAA server, a PDN gateway PGW, and a user equipment, to implement a dynamic adjustment of a PGW and prevent an unnecessary PGW reselection procedure.

In order to enable a person skilled in the art to have a better understanding of technical solutions in the embodiments of the present invention and make the foregoing objective, features, and advantages of the embodiments of the present invention more clear and comprehensible, the following further describes in detail the technical solutions in the embodiments of the present invention with reference to the accompanying drawings.

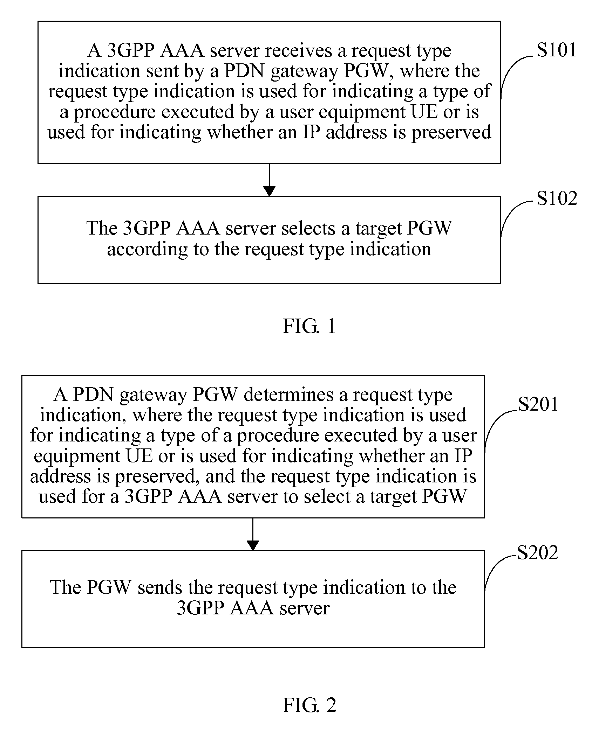

FIG. 1 is a flowchart of a method for selecting a PDN gateway PGW according to Embodiment 1 of the present invention. As shown in FIG. 1, the method includes the following steps:
Step S101: A 3GPP AAA server receives a request type indication sent by a PDN gateway PGW, where the request type indication is used for indicating a type of a procedure executed by a user equipment UE or is used for indicating whether an IP address is preserved.
Step S102: The 3GPP AAA server selects a target PGW according to the request type indication.

In the method according to Embodiment 1 of the present invention, a 3GPP AAA server receives a request type indication sent by a PGW, where the request type indication is used for indicating a type of a procedure executed by a user equipment UE or is used for indicating whether an IP address is preserved. The 3GPP AAA server determines, according to the request type indication, the procedure currently executed by the UE, and selects a target PGW with reference to the procedure executed by the UE, so that a PGW selection for the UE is implemented. In this way, a dynamic adjustment of a PGW can be implemented in a trusted or untrusted access network, and an unnecessary PGW reselection procedure is avoided.

Preferably, in the method according to Embodiment 1 of the present invention, in step S102, a first specific implementation manner for the 3GPP AAA server to select the target PGW according to the request type indication may be:
when the request type indication is used for indicating that the type of the procedure executed by the UE is a handover procedure, and an identifier of a dynamic PGW included in user subscription data delivered by a home subscriber server HSS is different from an identifier of the PGW, selecting the dynamic PGW as the target PGW; or
when the request type indication is used for indicating that the IP address is preserved, and an identifier of a dynamic PGW included in user subscription data delivered by a home subscriber server HSS is different from an identifier of the PGW, selecting the dynamic PGW as the target PGW.

Preferably, in the method according to Embodiment 1 of the present invention, in step S102, a second specific implementation manner for the 3GPP AAA server to select the target PGW according to the request type indication may be:
when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or
when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

It should be noted that the selecting a PGW nearest to the UE as the target PGW may include: determining position relationships between the UE and a plurality of PGWs according to a care-of address CoA IP of the UE and identifier information of the plurality of PGWs, and selecting the PGW nearest to the UE.

With reference to the second specific implementation manner for the 3GPP AAA server to select the target PGW according to the request type indication, the method may further include: when the target PGW is different from the PGW, the 3GPP AAA server sends information about the target PGW to a home subscriber server HSS.

Preferably, in the foregoing implementation manners of Embodiment 1 of the present invention, the method may further include: when the target PGW is different from the PGW, sending a PGW reselection indication and an identifier of the target PGW to the PGW.

FIG. 2 is a flowchart of a method for selecting a PDN gateway PGW according to Embodiment 2 of the present invention. As shown in FIG. 2, the method includes the following steps:
Step S201: A PDN gateway PGW determines a request type indication, where the request type indication is used for indicating a type of a procedure executed by a user equipment UE or is used for indicating whether an IP address is preserved, and the request type indication is used for a 3GPP AAA server selecting a target PGW.
Step S202: The PGW sends the request type indication to the 3GPP AAA server.

In the method according to Embodiment 2 of the present invention, a PGW determines a request type indication according to a procedure currently executed by a UE, where the request type indication is used for indicating a type of the procedure executed by the user equipment UE or is used for indicating whether an IP address is preserved, and sends the request type indication to a 3GPP AAA server, so as to instruct the 3GPP AAA server to select a target PGW. In this way, the 3GPP AAA server can determine, according to the request type indication, the procedure currently executed by the UE, and decide, with reference to the procedure executed by the UE, that PGW reselection is to be performed and obtain an identifier of the target PGW needed for the reselection. In this way, a dynamic adjustment of a PGW can be implemented in a trusted or untrusted access network, and an unnecessary PGW reselection procedure is avoided.

Preferably, the method according to Embodiment 2 of the present invention may further include: receiving, by the PGW, a request message, where the request message includes an IPSec tunnel establishment request message sent by the UE or a session establishment request message sent by an access network device.

In this case, the determining, by the PGW, a request type indication in step S201 may specifically include: determining, by the PGW, the request type indication according to whether the request message carries a handover indication or an IP address of the UE.

Preferably, with reference to the method according to the foregoing embodiment, the determining, by the PGW, the request type indication according to whether the request message carries a handover indication or the IP address of the UE includes: when the request message carries the IP address of the UE or carries the handover indication, setting a value of the request type indication to handover; or when the request message does not carry the IP address of the UE or does not carry the handover indication, setting a value of the request type indication to initial attach or initial request; or when the request message carries the IP address of the UE or carries the handover indication, setting a value of the request type indication to IP address preservation; or when the request message does not carry the IP address of the UE or does not carry the handover indication, setting a value of the request type indication to IP address un-preservation.

Preferably, with reference to the method according to the foregoing embodiments, the method may further include: receiving, by the PGW, a PGW reselection indication and an identifier of the target PGW which are sent by the 3GPP AAA server, and sending the identifier of the target PGW to the UE.

It is already mentioned above that non-3GPP access networks can be classified into trusted access networks and untrusted access networks. The following separately describes in detail the optimized solutions, for selecting a PGW, provided in Embodiment 1 and Embodiment 2 in the two types of access networks.

### Embodiment 3

Embodiment 3 of the present invention implements an optimized solution for selecting a PGW in a process of a UE establishing a connection to a network side in a trusted access network architecture. By adopting Embodiment 3 of the present invention, a dynamic adjustment of a PGW can be implemented in a trusted access network, and an unnecessary PGW reselection procedure is avoided.

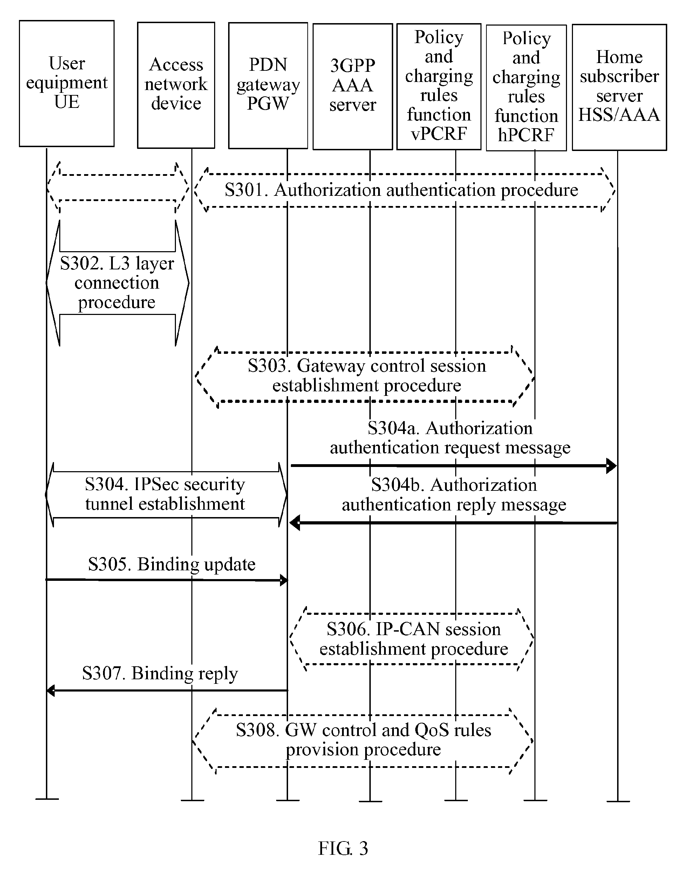

FIG. 3 is a signaling flowchart of a method for selecting a PDN gateway PGW according to Embodiment 3 of the present invention. The method includes the following steps:
Step S301: Perform access authorization authentication for a UE.

Specifically, the access authorization authentication procedure in step S301 may include the following steps:
The UE initiates an access authorization authentication procedure. Specifically, the UE sends a user identifier to an access network device in a trusted access network (Trusted Non 3GPP IP Access Network); and after receiving the user identifier, the access network device sends an authorization authentication request message to a 3GPP AAA server (3GPP AAA Server). The authorization authentication request message includes the user identifier of the UE, an authorization authentication type, an access type, a mobility protocol supported by the access network device, and the like.

After receiving the authorization authentication request message, the 3GPP AAA server sends an authentication request to a home subscriber server HSS, obtains authentication vectors for the authorization authentication of the UE, and sends the authentication vectors to the UE by using the access network device.

The UE performs mutual authorization between the UE and a network side according to the authentication vectors. After the authentication is passed, the 3GPP AAA server obtains user subscription data corresponding to the UE from the HSS, and registers an identifier of the 3GPP AAA server with the HSS.
Step S302: Establish an IP connection between the UE which passes the authorization authentication and the access network device.

For the UE which passes the authorization authentication, an IP connection is established between the UE and the access network device. Specifically, establishing the IP connection includes: obtaining, by the UE, a local IP address from the access network device, and storing, by the UE, the local IP address as a care-of address (CoA IP).
Step S303: If a PCRF (Policy and Charging Rules Function, policy and charging rules control) is deployed at the network side, the access network device triggers establishment of a gateway control session.

Specifically, the access network device sends the local IP address of the UE (which is obtained in step S302) to the PCRF. The PCRF decides a QoS (Quality of Service, quality of service) policy according to the user identifier of the UE, user service subscription data, an operator policy, and the like.

It should be noted that when no PCRF is deployed at the network side, skip step S303, and proceed with step S304.
Step S304: Establish an IPSec tunnel.

First, the UE discovers a PGW. A PGW discovery mechanism is the same as the prior art. For example, the UE may find an IP address corresponding to the PGW by querying a DNS (Domain Name System, domain name system), or the UE obtains an IP address corresponding to the PGW from the network side. Definitely, which manner the UE adopts to discover a PGW is not limited in the embodiment of present invention, and existing PGW discovery mechanisms are all applicable to the method according to the embodiment of the present invention.

Then the UE initiates establishment of an IPSec tunnel. The IPSec tunnel is used for protecting DSMIP signaling between the UE and the PGW, and is used for passing authorization authentication parameters. If the UE needs to preserve the local IP address obtained in step S302, for example, the UE performs a handover procedure, the UE sends an IPSec tunnel establishment request message carrying the local IP address to the PGW. The establishment request message may further include an APN (Access Point Name, network access point name).

Step S304a: The PGW receives the IPSec tunnel establishment request message sent by the UE, and determines a request type indication according to whether the IPSec tunnel establishment request message carries a handover indication or the IP address of the UE.

The PGW sends an authorization authentication request message to the 3GPP AAA server, where the authorization authentication request message includes the request type indication, where the request type indication is used for indicating a type of a procedure executed by the user equipment UE or is used for indicating whether the IP address is preserved. The request type indication is used for the 3GPP AAA server selecting a target PGW.

It should be noted that in the method according to the embodiment of the present invention, the request type indication may be used for indicating a type of a procedure executed by the user equipment UE or may be used for indicating whether the IP address is preserved. For example, when executing a handover procedure, the UE adds the local IP address to the IPSec tunnel establishment request message sent to the PGW; when executing an initial attach procedure, the UE does not need to add the local IP address to the IPSec tunnel establishment request message.

Therefore, the PGW can determine, based on the information which indicates the type of the procedure currently executed by the UE and is carried in the received IPSec tunnel establishment request message, the procedure currently executed by the UE. For example, the information may be the local IP address of the UE; specifically, if the IPSec tunnel establishment request message received by the PGW carries the local IP address of the UE, the PGW determines that the UE executes a handover procedure; and if the IPSec tunnel establishment request message received by the PGW does not carry the local IP address of the UE, the PGW determines that the UE executes an initial attach procedure.

The PGW sends the authorization authentication request message to the 3GPP AAA server. The authorization authentication request message includes the user identifier of the UE, authorization authentication parameters, an identifier of the PGW (the IP address of the PGW or a FQDN (Fully Qualified Domain Name, fully qualified domain name) of the PGW), the APN, the CoA IP of the UE, and the request type indication.

It should be noted in detail that in the embodiment of the present invention, the request type indication may be in the following forms:
(1) If the UE executes a handover procedure, the PGW sets a value of the request type indication to handover (Handover); if the UE executes an initial attach procedure, the PGW sets a value of the request type indication to initial attach (Initial Attach) or initial request (Initial Request); however, a specific parameter name is not limited in the present invention.

When receiving the authorization authentication request message, the 3GPP AAA server checks the request type indication. When the value of the request type indication is "Handover", it is determined that the UE executes a handover procedure; when the value of the request type indication is "Initial Attach" or "Initial Request", it is determined that the UE executes an initial attach procedure.
(2) If the UE executes a handover procedure, the PGW sets a value of the request type indication to IP address preservation; if the UE executes an initial attach procedure, the PGW sets a value of the request type indication to IP address un-preservation.

Specifically, the request type indication may be an IP address preservation Indication. If the UE executes a handover procedure, the PGW sets the parameter indicating whether the UE preserves the local IP address to "True", that is, IP address preservation; and if the UE executes an initial attach procedure, the PGW sets the parameter indicating whether the UE preserves the local IP address to "Flase", that is, IP address un-preservation.

When receiving the authorization authentication request message, the 3GPP AAA server checks the request type indication. When the request type indication is True, it is determined that the UE executes an handover procedure; when the request type indication is Flase, it is determined that the UE executes an initial attach procedure.
(3) The request type indication is a UE initial attach indication parameter.

Specifically, the request type indication may be Initial Attach or IP address un-preservation. If the UE executes a handover procedure, the PGW sets the UE initial attach indication parameter as null, that is, the authorization authentication request message does not carry any indication information; and if the UE executes an initial attach procedure, the PGW sets the UE initial attach indication parameter to "initial attach indication (Initial Attach)" or "IP address un-preservation (IP address un-preservation)".

When receiving the authorization authentication request message, the 3GPP AAA server checks the request type indication. When the request type indication is null, it is determined that the UE executes an handover procedure; when the request type indication is Initial Attach or IP address un-preservation, it is determined that the UE executes an initial attach procedure.
(4) The request type indication is a UE handover indication parameter.

Specifically, the request type indication may be Handover or IP address preservation. If the UE executes a handover procedure, the PGW sets the UE handover indication parameter to "handover (Handover)" or "IP address preservation (IP address Preservation)"; and if the UE executes an initial attach procedure, the PGW sets the UE handover indication parameter as null, that is, the authorization authentication request message does not carry any indication information.

When receiving the authorization authentication request message, the 3GPP AAA server checks the request type indication. When the request type indication is null, it is determined that the UE executes an initial attach procedure; when the request type indication is Handover or IP address Preservation, it is determined that the UE executes a handover procedure.

Step S304b: When receiving the authorization authentication request message, the 3GPP AAA server determines, according to the request type indication, whether a PGW reselection procedure is to be performed.

Specifically, the 3GPP AAA server determines, according to the request type indication carried in the authorization authentication request message, the procedure currently executed by the UE, and determines, with reference to the user subscription data (which is obtained from the HSS), the identifier of the current source PGW, APN information of an access point (which is obtained from the source PGW or is a default APN in the user subscription data), operator configuration information, and the like, whether the PGW reselection procedure is to be performed.

Specifically, the determining, by the 3GPP AAA server, whether a PGW reselection procedure is to be performed may specifically include the following steps:
(1) If an identifier of a static PGW corresponding to the APN of the current access point is set in the user subscription data,
   a: if the identifier of the static PGW is different from the identifier of the source PGW (that is, the current PGW), the 3GPP AAA server sends the identifier of the static PGW (which is used as an identifier of the target PGW) and a PGW reselection indication to the source PGW, to instruct the source PGW to perform the PGW reselection procedure; or
   b: if the identifier of the static PGW is the same as the identifier of the source PGW, the 3GPP AAA server does not instruct the source PGW to perform the PGW reselection procedure.
(2) If no identifier of a static PGW corresponding to the APN of the current access point is set in the user subscription data, that is, no PGW identifier exists or an identifier of a dynamic PGW corresponding to the APN exists,
   a: if the UE executes an initial attach procedure (the request type indication is used for indicating that the type of the procedure executed by the UE is an initial attach or initial request or is used for indicating that the IP address is not preserved), and it is determined according to the operator configuration information that a PGW is to be reselected, the 3GPP AAA server decides, according to the operator configuration information, the care-of address CoA IP of the UE, the identifier of the current PGW, and the like, whether the PGW reselection procedure is to be performed.

Specifically, the 3GPP AAA server selects a PGW nearest to the UE as the target PGW, or selects a PGW with lowest load as the target PGW.

Specifically, the 3GPP AAA server can determine a position relationship between the UE and the PGW according to the CoA IP of the UE and the identifier information of the PGW.

If the UE executes an initial attach procedure and the 3GPP AAA server decides, based on the operator configuration, that a PGW is to be reselected, for example, in a case in which the source PGW is far away from the UE or the source PGW is heavily loaded, the 3GPP AAA server selects, according to the CoA IP of the UE, a PGW nearest to the UE as the target PGW or selects a PGW with lowest load as the target PGW, and sends an identifier of the target PGW and a PGW reselection indication to the source PGW.

Specifically, the selecting a PGW nearest to the UE as the target PGW may be implemented through the following steps: determining position relationships between the UE and a plurality of PGWs according to the care-of address CoA IP of the UE and identifier information of the plurality of PGWs, and selecting the PGW nearest to the UE.

Otherwise, the 3GPP AAA server does not instruct the source PGW to perform the PGW reselection procedure. Even if the identifier of the dynamic PGW indicated in the user subscription data is different from the identifier of the source PGW, the PGW reselection procedure is not performed.

It should be noted that a specific solution for selecting the target PGW is not limited in the method according to the embodiment of the present invention.

In a scenario where the UE executes an initial attach, the 3GPP AAA server sends a binding relationship between the identifier of the target PGW and the APN to the HSS.
b: If the UE executes a handover procedure (the request type indication is used for indicating that the type of the procedure executed by the UE is a handover procedure or is used for indicating that the IP address is preserved), the 3GPP AAA server decides whether the PGW reselection procedure is to be performed according to the user subscription data, the identifier information of the current PGW, and the like.

Specifically, if the identifier of the dynamic PGW included in the user subscription data delivered by the HSS is different from the identifier of the source PGW and the UE executes an handover procedure, the 3GPP AAA server selects the dynamic PGW as the target PGW, and sends a PGW reselection indication and an identifier of the target PGW to the source PGW, to instruct the source PGW to perform a PGW reselection procedure.

Otherwise, when the identifier of the source PGW is the same as the identifier of the dynamic PGW which is corresponding to the APN and indicated in the user subscription data, the 3GPP AAA server does not instruct the source PGW to perform the PGW reselection procedure.

When the target PGW is different from the source PGW, the 3GPP AAA server sends information about the target PGW to the home subscriber server HSS.

In this way, the process in which the 3GPP AAA server decides whether the PGW reselection procedure is to be performed is completed.

If the source PGW receives the PGW reselection indication and the identifier of the target PGW, the source PGW sends the identifier of the target PGW to the UE, and the UE initiates the PGW reselection procedure.

If PGW reselection does not need to be performed, the PGW assigns, based on a request of the UE, an IPv6 address prefix to the UE, and the UE may obtain a home IPv6 address (HoA (Home Adress, home address) IP address) according to an automatic configuration protocol.
Step S305: The UE sends a binding update message to the PGW.

The binding update message includes the HoA IP and the CoA IP of the UE and a valid binding lifetime (lifetime). The UE may also add an IPv4 address request indication to the binding update message.
Step S306: If the PCRF is deployed at the network side, the PGW triggers an IP-CAN (IP-Connectivity Access Network) session establishment procedure.

Specifically, the PGW sends an IP-CAN session establishment request message to the PCRF, where the session establishment request message at least includes the HoA IP and the CoA IP of the UE. In addition, the session establishment request message may also include information such as the user identifier, the APN, and default bearer QoS parameters.

The PCRF sends an IP-CAN session establishment response message to the PGW. The session establishment response message carries a PCC (policy and charging control) rule.

It should be noted that when no PCRF is deployed at the network side, skip step S306, and proceed with step S307.
Step S307: The PGW sends a binding notification message to the UE. The binding notification message includes the valid binding lifetime, and the HoA IP and the CoA IP of the UE. If the UE applies for an IPv4 address in step S105, the PGW sends an assigned IPv4 address to the UE by using the binding notification message.
Step S308: The PCRF initiates a GW Control and QoS rules provision procedure. This procedure is the same as the prior art, which is not described repeatedly herein.

In the method according to Embodiment 3 of the present invention, an IPSec tunnel establishment request message sent by a UE to a PGW carries information used for indicating a type of a procedure currently executed by the UE; the PGW determines, according to the information, the procedure currently executed by the UE, and sends an authorization authentication request message carrying a request type indication to a 3GPP AAA server; when receiving the authorization authentication request message, the 3GPP AAA server determines, according to the request type indication carried in the authorization authentication request message, the procedure currently executed by the UE, decides, with reference to user subscription data, an identifier of the current source PGW, APN information of an access point, and the like, that a PGW reselection procedure is to be performed and obtains an identifier of a target PGW needed for the reselection, and sends the identifier of the target PGW to the UE by using the PGW, so that the UE implements a PGW selection. In this way, a dynamic adjustment of a PGW can be implemented in a trusted access network, and an unnecessary PGW reselection procedure is avoided.

### Embodiment 4

Embodiment 4 of the present invention implements an optimized solution for selecting a PGW in a process of a UE establishing a connection to a network side in an untrusted access network architecture. By adopting Embodiment 4 of the present invention, a dynamic adjustment of a PGW can be implemented in an untrusted access network, and an unnecessary PGW reselection procedure is avoided.

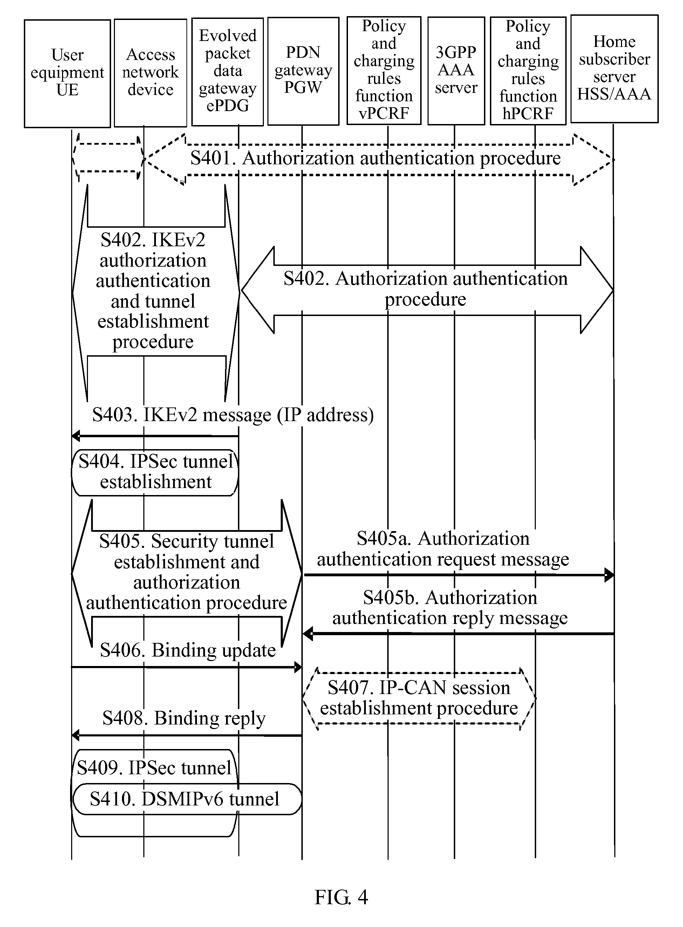

FIG. 4 is a signaling flowchart of a method for selecting a PDN gateway PGW according to Embodiment 4 of the present invention. The method includes the following steps:
Step S401: Perform access authorization authentication for a UE.

After the UE passes the authorization authentication, an access network device assigns a local IP address to the UE.
Step S402: The UE obtains an ePDG address, for example, may obtain the ePDG address by means of DNS resolution. The UE initiates, by using the local IP address assigned by the access network device as a source address, a procedure for establishing an IPSec tunnel to an ePDG.

The UE and a network side perform mutual authorization authentication, and the ePDG assigns a CoA IP to the UE which passes the authorization authentication.
Step S403: The ePDG sends the CoA IP address, which is assigned by the ePDG to the UE, to the UE by using an IKEv2 message.
Step S404: The IPSec tunnel between the UE and the ePDG is established.
Step S405: The same as step S304 in Embodiment 3.
Step S406: The same as step S305 in Embodiment 3.
Step S407: The same as step S306 in Embodiment 3.
Step S408: The same as step S307 in Embodiment 3.
Step S409: An IP connection is established.

In the method according to Embodiment 4 of the present invention, an IPSec tunnel establishment request message sent by a UE to a PGW carries information used for indicating a type of a procedure currently executed by the UE; the PGW determines, according to the information, the procedure currently executed by the UE, and sends an authorization authentication request message carrying a request type indication to a 3GPP AAA server; when receiving the authorization authentication request message, the 3GPP AAA server determines, according to the request type indication carried in the authorization authentication request message, the procedure currently executed by the UE, decides, with reference to user subscription data, an identifier of the current source PGW, APN information of an access point, and the like, that a PGW reselection procedure is to be performed and obtains an identifier of a target PGW needed for the reselection, and sends the identifier of the target PGW to the UE by using the PGW, so that the UE implements PGW selection. In this way, a dynamic adjustment of a PGW can be implemented in an untrusted access network, and an unnecessary PGW reselection procedure is avoided.

Corresponding to the methods for selecting a PDN gateway PGW provided by Embodiment 1 to Embodiment 4 of the present invention, embodiments of the present invention further provide a 3GPP AAA server and a PDN gateway PGW.

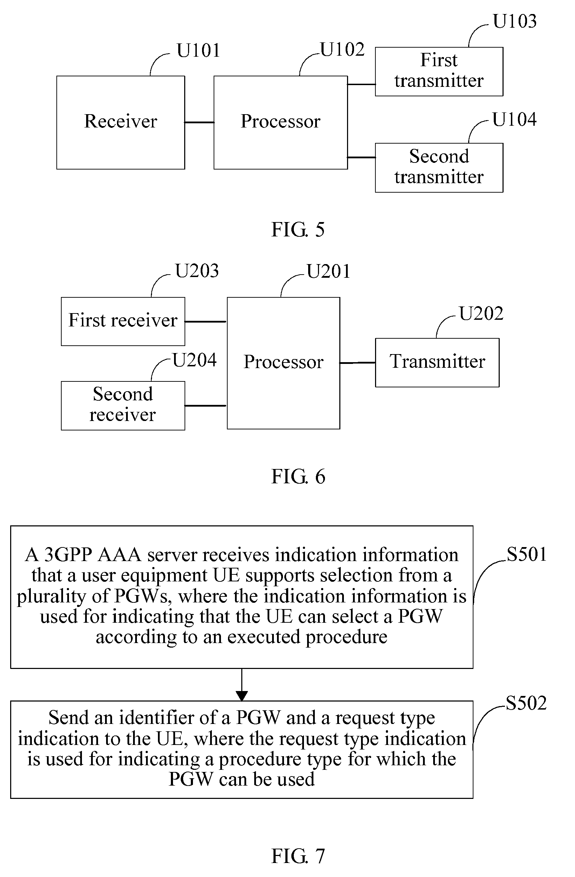

FIG. 5 is a structural diagram of a 3GPP AAA server according to Embodiment 1 of the present invention. As shown in FIG. 5, the 3GPP AAA server may include a receiver U101 and a processor U102.

The receiver U101 is configured to receive a request type indication sent by a PDN gateway PGW, where the request type indication is used for indicating a type of a procedure executed by a user equipment UE or is used for indicating whether an IP address is preserved.

The processor U102 is configured to select a target PGW according to the request type indication.

The 3GPP AAA server according to Embodiment 1 of the present invention receives a request type indication sent by a PGW, where the request type indication is used for indicating a type of a procedure executed by a user equipment UE or is used for indicating whether an IP address is preserved. The 3GPP AAA server determines, according to the request type indication, the procedure currently executed by the UE, and selects a target PGW with reference to the procedure executed by the UE, so that a PGW selection for the UE is implemented. In this way, a dynamic adjustment of a PGW can be implemented in a trusted or untrusted access network, and an unnecessary PGW reselection procedure is avoided.

Preferably, a first specific implementation manner for the processor U102 to select the target PGW according to the request type indication may be:
when the request type indication is used for indicating that the type of the procedure executed by the UE is a handover procedure, and an identifier of a dynamic PGW included in user subscription data delivered by a home subscriber server HSS is different from an identifier of the PGW, selecting the dynamic PGW as the target PGW; or
when the request type indication is used for indicating that the IP address is preserved, and an identifier of a dynamic PGW included in user subscription data delivered by a home subscriber server HSS is different from an identifier of the PGW, selecting the dynamic PGW as the target PGW.

Preferably, a second specific implementation manner for the processor U102 to select the target PGW according to the request type indication may be:
when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or
when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

It should be noted that in the two specific implementation manners, the selecting, by the processor U102, a PGW nearest to the UE as the target PGW may include: determining position relationships between the UE and a plurality of PGWs according to a care-of address CoA IP of the UE and identifier information of the plurality of PGWs, and selecting the PGW nearest to the UE.

Preferably, the 3GPP AAA server may further include: a first transmitter U103, configured to send information about the target PGW to a home subscriber server HSS when the target PGW is different from the PGW.

Preferably, the 3GPP AAA server may further include: a second transmitter U104, configured to send a PGW reselection indication and an identifier of the target PGW to the PGW when the target PGW is different from the PGW.

FIG. 6 is a structural diagram of a PDN gateway PGW according to Embodiment 1 of the present invention. As shown in FIG. 6, the PDN gateway PGW may include: a processor U201 and a transmitter U202.

The processor U201 is configured to determine a request type indication, where the request type indication is used for indicating a type of a procedure executed by a user equipment UE or is used for indicating whether an IP address is preserved, and the request type indication is used by a 3GPP AAA server to select a target PGW.

The transmitter U202 is configured to send the request type indication to the 3GPP AAA server.

The PGW according to Embodiment 1 of the present invention determines a request type indication according to a procedure currently executed by a UE, where the request type indication is used for indicating a type of the procedure executed by the user equipment UE or is used for indicating whether an IP address is preserved, and sends the request type indication to a 3GPP AAA server, so as to instruct the 3GPP AAA server to select a target PGW. In this way, the 3GPP AAA server can determine, according to the request type indication, the procedure currently executed by the UE, and decide, with reference to the procedure executed by the UE, that PGW reselection is to be performed and obtain an identifier of the target PGW needed for the reselection. In this way, a dynamic adjustment of a PGW can be implemented in a trusted or untrusted access network, and an unnecessary PGW reselection procedure is avoided.

Preferably, the PGW may further include: a first receiver U203, configured to receive a request message, where the request message includes an IPSec tunnel establishment request message sent by the UE or a session establishment request message sent by an access network device.

In this case, the determining, by the processor U201, a request type indication may include: determining the request type indication according to whether the request message carries a handover indication or the IP address of the UE.

Preferably, a specific implementation manner for the processor U201 to determine the request type indication according to whether the request message carries the handover indication or the IP address of the UE may be:
when the request message carries the IP address of the UE or carries the handover indication, setting a value of the request type indication to handover; or when the request message does not carry the IP address of the UE or does not carry the handover indication, setting a value of the request type indication to initial attach or initial request; or when the request message carries the IP address of the UE or carries the handover indication, setting a value of the request type indication to IP address preservation; or when the request message does not carry the IP address of the UE or does not carry the handover indication, setting a value of the request type indication to IP address un-preservation.

Preferably, the PDN gateway PGW may further include: a second receiver U204, configured to receive a PGW reselection indication and an identifier of the target PGW which are sent by the 3GPP AAA server; and the third transmitter is further configured to send the identifier of the target PGW to the UE.

FIG. 7 is a flowchart of a method for selecting a PDN gateway PGW according to Embodiment 5 of the present invention. As shown in FIG. 7, the method includes the following steps:
Step S501: A 3GPP AAA server receives indication information that a user equipment UE supports selection from a plurality of PGWs, where the indication information is used for indicating that the UE can select a PGW according to an executed procedure.
Step S502: Send an identifier of a PGW and a request type indication to the UE, where the request type indication is used for indicating a procedure type for which the PGW can be used.

The method according to Embodiment 5 of the present invention is used in a case in which a UE supports selection from a plurality of PGWs. After receiving indication information that a user equipment UE supports selection from a plurality of PGWs, a 3GPP AAA server identifies a PGW according to a service procedure, to indicate procedure types for which each PGW can be used; and forwards, to the UE, an identifier of a PGW and a request type indication used for indicating a procedure type for which the PGW can be used. In this way, the UE may reselect a corresponding PGW according to a currently executed procedure and with reference to the identifier. In this way, a dynamic adjustment of a PGW can be implemented in a trusted or untrusted access network, and subsequent initiation of an unnecessary PGW reselection procedure is avoided.

Preferably, in the embodiment of the present invention, the PGW is a dynamic PGW included in user subscription data, and the request type indication is used for indicating a handover procedure type; or the PGW is a static PGW included in user subscription data, and the request type indication is used for indicating a handover procedure type; or the PGW is a PGW selected according to operator configuration information, and the request type indication is used for indicating an initial attach procedure type; or the PGW is a static PGW included in user subscription data, and the request type indication is used for indicating an initial attach type.

It should be noted that the PGW selected according to the operator configuration information may be a PGW nearest to the UE or a PGW with lowest load.

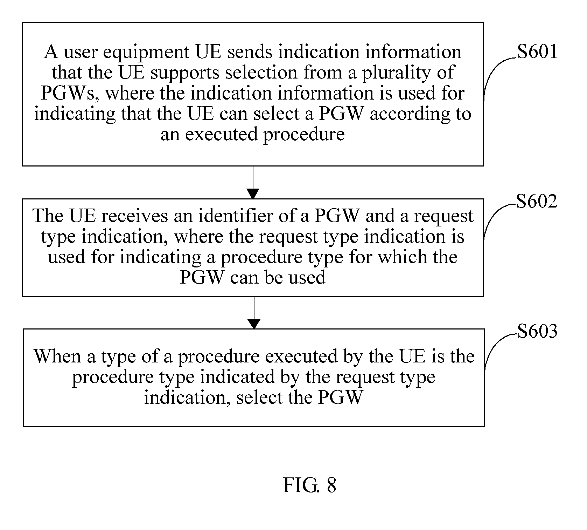

Specifically, the selecting a PGW nearest to the UE may be implemented through the following steps: determining position relationships between the UE and a plurality of PGWs according to the care-of address CoA IP of the UE and identifier information of the plurality of PGWs, and selecting the PGW nearest to the UE. FIG. 8 is a flowchart of a method for selecting a PDN gateway PGW according to Embodiment 6 of the present invention. As shown in FIG. 8, the method includes the following steps:
Step S601: A user equipment UE sends indication information that the UE supports selection from a plurality of PGWs, where the indication information is used for indicating that the UE can select a PGW according to an executed procedure.
Step S602: The UE receives an identifier of a PGW and a request type indication, where the request type indication is used for indicating a procedure type for which the PGW can be used.
Step S603: When a type of a procedure executed by the UE is a procedure type indicated by the request type indication, select the PGW.

The method according to Embodiment 6 of the present invention is used in a case in which a UE supports selection from a plurality of PGWs. A UE sends indication information that the UE supports selection from a plurality of PGWs to a 3GPP AAA server, where the indication information is used for indicating that the UE can select a PGW according to an executed procedure; the 3GPP AAA server sends, to the UE, an identifier of a PGW and an request type indication used for indicating a procedure type for which the PGW can be used; and the UE performs PGW reselection according to a currently executed procedure, to select a PGW which can be used for the type of the procedure currently executed by the UE. In this way, a dynamic adjustment of a PGW can be implemented in a trusted or untrusted access network, and subsequent initiation of an unnecessary PGW reselection procedure is avoided.

It is already mentioned above that non-3GPP access networks can be classified into trusted access networks and untrusted access networks. The following separately describes in detail the optimized solutions, for selecting a PGW in the two types of access networks according to Embodiment 5 and Embodiment 6.

### Embodiment 7

Embodiment 7 of the present invention implements an optimized solution for selecting a PGW in a process in which a UE establishes a connection to a network side in a trusted access network architecture. By adopting Embodiment 7 of the present invention, a dynamic adjustment of a PGW can be implemented in a trusted access network, and subsequent initiation of an unnecessary PGW reselection procedure is avoided.

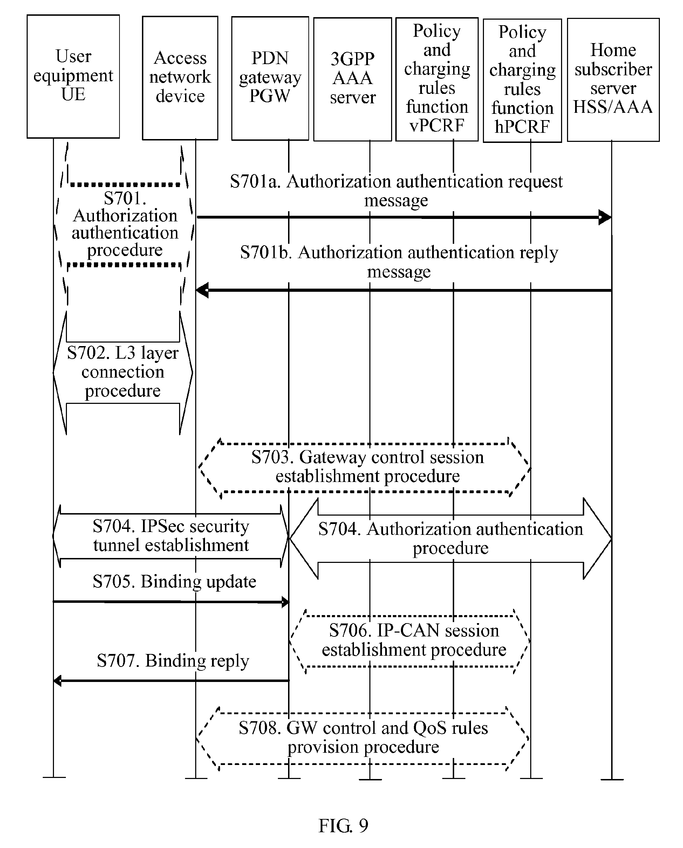

FIG. 9 is a signaling flowchart of a method for selecting a PDN gateway PGW according to Embodiment 7 of the present invention. The method includes the following steps:
Step S701: Perform access authorization authentication for a UE.

The UE initiates an access authorization authentication procedure. Specifically, the UE sends a user identifier to an access network device; and the access network device sends an authorization authentication request message to a 3GPP AAA server.

What is different from step S301 in Embodiment 3 is that if the UE supports a mechanism for selection from a plurality of PGWs, the UE sends indication information that the UE supports selection from a plurality of PGWs to the access network device. The indication information is used for indicating that the UE can select a PGW according to an executed procedure.
Step S701a: The access network device sends the authorization authentication request message to the 3GPP AAA server. The authorization authentication request message includes the user identifier of the UE, an authorization authentication type, an access type, a mobility protocol supported by the access network device, the indication information that the UE supports selection from a plurality of PGWs, and the like.
Step S701b: The 3GPP AAA server sends an authentication request to an HSS, obtains authentication vectors needed for the authorization authentication of the UE, and sends the authentication vectors to the UE through the access network device. The UE performs mutual authentication between the UE and a network side according to the authentication vectors. After the UE passes the authentication, the 3GPP AAA server obtains user subscription data corresponding to the UE from the HSS, and registers an identifier of the 3GPP AAA server with the HSS. The user subscription data includes the user identifier, APN information of an access point, and an identifier of a PGW corresponding to the APN.

For the UE supporting the mechanism for selection from a plurality of PGWs, if the PGW corresponding to the APN is a dynamic PGW, the 3GPP AAA server may select another PGW for the UE according to operator configuration information.

It should be noted that the another PGW may be selected based on a current position of the UE, for example, a PGW nearest to the UE is selected; or the selection is performed according to load of a PGW, for example, a PGW with lowest load is selected. A solution for selecting the PGW is not limited in the embodiment of the present invention.

For the UE supporting the mechanism for selection from a plurality of PGWs, the 3GPP AAA server sends the user subscription data in an authorization authentication response message to the access network device. In the case in which the APN is corresponding to an identifier of a dynamic PGW, the 3GPP AAA server adds a request type indication to the access network device. The request type indication is used for indicating a procedure type for which a PGW can be used.

For a dynamic PGW included in the user subscription data delivered by the HSS, the dynamic PGW may be used when the UE executes a handover procedure, and a request type indication indicating that the PGW is used for a handover procedure type is set for the PGW; for a PGW selected according to the operator configuration information, the PGW may be used when the UE executes an initial attach procedure, and a request type indication indicating that the PGW is used for an initial attach procedure type is set for the PGW; for a static PGW included in the user subscription data delivered by the HSS, the static PGW may be used when the UE executes a handover procedure and may also be used when the UE executes an initial attach procedure, both a request type indication indicating that the PGW is used for a handover procedure type and a request type indication indicating that the PGW is used for an initial attach procedure type may be set for the static PGW, or for the APN, only one unique static PGW is sent to the UE, the UE shall select the static PGW in any scenario.

It should be noted that the PGW selected according to the operator configuration information may be a PGW nearest to the UE or a PGW with lowest load.

The selecting a PGW nearest to the UE may be implemented through the following steps: determining position relationships between the UE and a plurality of PGWs according to the care-of address CoA IP of the UE and identifier information of the plurality of PGWs, and selecting the PGW nearest to the UE.

Specific implementation solutions may include the following types:
(1) The request type indication set by the 3GPP AAA server for the PGW which is used when the UE executes the handover procedure may be a "Handover" indication or an APN indication used for the handover procedure; and the request type indication set for the PGW which is used when the UE executes the initial attach procedure may be an "Initial Attache" indication or an APN indication used for the initial attach procedure.
(2) The request type indication set by the 3GPP AAA server for the PGW which is used when the UE executes the handover procedure may be a "Handover" indication or an APN indication used for the handover procedure; and the request type indication set for the PGW which is used when the UE executes the initial attach procedure may be a null indication, that is, no indication is set.
(3) The request type indication set by the 3GPP AAA server for the PGW which is used when the UE executes the initial attach procedure may be an "Initial Attache" indication or an APN indication used for the initial attach procedure; and the request type indication set for the PGW which is used when the UE executes the handover procedure may be a null indication, that is, no indication is set.

The 3GPP AAA server sends an identifier of the PGW used for the handover procedure and the request type indication to the access network device.
Step S702: Establish an IP connection between the UE which passes the authorization authentication and the access network device.

For the UE which passes the authorization authentication, an IP connection between the UE and the access network device is established. Specifically, establishing the IP connection includes: obtaining, by the UE, a local IP address from the access network device, and storing, by the UE, the local IP address as a care-of address (CoA IP).

What is different from step 302 in Embodiment 3 is that if the access network device obtains identifiers and request type indications of a plurality of PGWs corresponding to an APN from the 3GPP AAA server, the access network device sends, to the UE, the APN and the identifiers and the request type indications of the plurality of PGWs corresponding to the APN.
Step S703: If a PCRF (Policy and Charging Rules Function, policy and charging rules function) is deployed at the network side, the access network device triggers establishment of a gateway control session.

This step is the same as step S303 in Embodiment 3.
Step S704: Establish an IPSec tunnel.

The UE discovers a PGW.

The UE initiates establishment of an IPSec tunnel.

What is different from step S304 in Embodiment 3 is that for the UE supporting the mechanism for selection from a plurality of PGWs, the UE receives the identifiers and the request type indications, which are sent by the access network device, of the plurality of PGWs, where the request type indications are used for indicating procedure types for which the PGWs can be used.

The UE performs PGW selection according to a procedure to be executed. Specifically, the UE selects a PGW of which a procedure type indicated by a request type indication is a type of a procedure executed by the UE.

Specifically, if the UE executes a handover procedure, the UE selects a PGW of which a procedure type indicated by a request type indication is a handover procedure to initiate the IPSec tunnel establishment procedure. Specifically, a PGW which is corresponding to the APN and with a "Handover" indication or an APN indication used for a handover procedure may be selected.

If the UE executes an initial attach procedure, the UE selects a PGW of which a procedure type indicated by the request type indication is an initial attach procedure to initiate the IPSec tunnel establishment procedure. Specifically, a PGW with an "Initial Attache" indication or an APN indication used for an initial attach procedure may be selected.

For an APN, if the UE only receives an identifier of a unique PGW, the UE adopts the identifier of the unique PGW.
Step S704a: The PGW sends an authorization authentication request message to the 3GPP AAA server. The authorization authentication request message includes the user identifier of the UE, authorization authentication parameters, the identifier of the PGW, the APN, and the CoA IP of the UE.
Step S704b: For the UE supporting the mechanism for selection from a plurality of PGWs (the 3GPP AAA server obtains information that the UE has this capacity through step S701a), the 3GPP AAA server does not perform a PGW reselection procedure in any case.

For the UE which passes the authorization authentication, the 3GPP AAA server sends user subscription data to the PGW. The user subscription data includes the user identifier of the UE, APN information, default bearer QoS parameters, and the like.

The PGW assigns, based on a request of the UE, an IPv6 address prefix to the UE, and the UE may obtain a home IP address (HoA IP address) according to an automatic configuration protocol.
Step S705: The same as step S305 in Embodiment 3.
Step S706: The same as step S306 in Embodiment 3.
Step S707: The same as step S307 in Embodiment 3.
Step S708: The same as step S308 in Embodiment 3.

The method according to Embodiment 7 of the present invention is used in a case in which a UE supports selection from a plurality of PGWs. A UE sends indication information that the UE supports selection from a plurality of PGWs to a 3GPP AAA server, the 3GPP AAA server identifies a PGW according to a service procedure, to indicate procedure types for which PGWs can be used; and forwards, to the UE, an identifier of the PGW and a request type indication used for indicating a procedure type for which the PGW can be used. The UE performs PGW reselection according to a currently executed procedure, to select a PGW which can be used for a type of the procedure currently executed by the UE. In this way, a dynamic adjustment of a PGW can be implemented in a trusted access network, and subsequent initiation of an unnecessary PGW reselection procedure is avoided.

### Embodiment 8

Embodiment 8 of the present invention implements an optimized solution for selecting a PGW in a process in which a UE establishes a connection to a network side in an untrusted access network architecture. By adopting Embodiment 8 of the present invention, a dynamic adjustment of a PGW can be implemented in a trusted access network, and subsequent initiation of an unnecessary PGW reselection procedure is avoided.

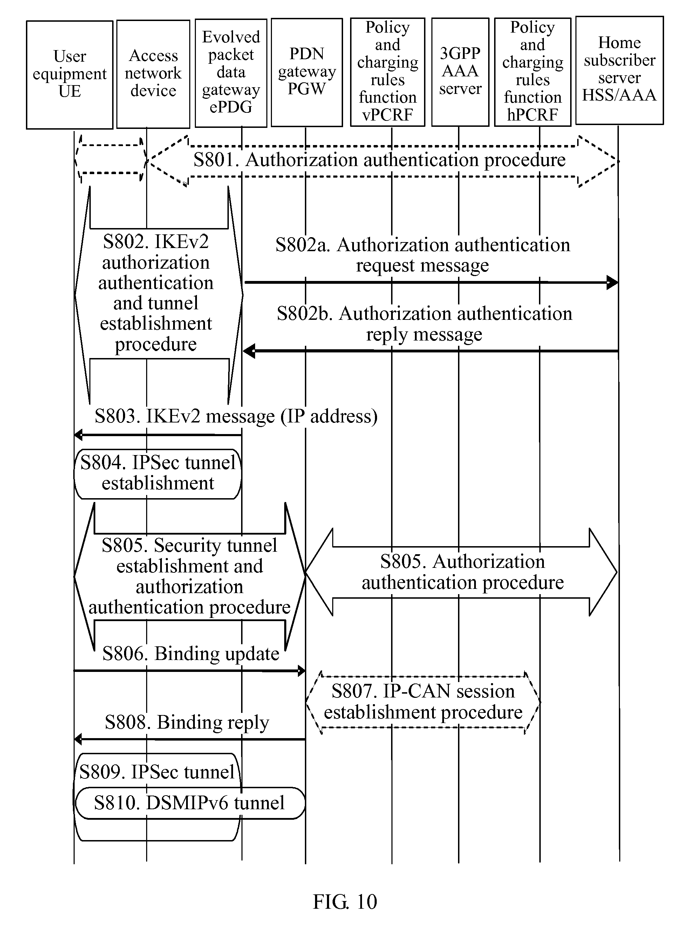

FIG. 10 is a signaling flowchart of a method for selecting a PDN gateway PGW according to Embodiment 4 of the present invention. The method includes the following steps:
Step S801: Perform access authorization authentication for a UE.

After the UE passes the authorization authentication, an access network device assigns a local IP address to the UE.
Step S802: The UE obtains an ePDG address, for example, may obtain the ePDG address by means of DNS resolution. The UE initiates, by using the local IP address assigned by the access network device as a source address, a procedure for establishing an IPSec tunnel to an ePDG.

The UE and a network side perform mutual authorization authentication, and the ePDG assigns a CoA IP to the UE which passes the authorization authentication.

If the UE supports a mechanism for selection from a plurality of PGWs, the UE sends an indication that the UE supports selection from a plurality of PGWs to the ePDG.
Step S802a: The ePDG sends an authorization authentication request message to a 3GPP AAA server. The authorization authentication request message includes the user identifier of the UE, an authorization authentication type, an access type, a mobility protocol supported by the access network device, the indication that the UE supports selection from a plurality of PGWs, and the like.
Step S802b: The same as step S701b in Embodiment 7. This step further includes: for the UE which passes the authorization authentication, if the ePDG obtains identifier information of a plurality of PGWs corresponding to an APN from the 3GPP AAA server, that is, information of an identifier of the PGW used for the handover procedure and an identifier of the PGW used for the initial attach procedure, the ePDG sends, to the UE, the APN, and the identifiers of the plurality of PGWs corresponding to the APN and used for the handover procedure and the identifiers of the plurality of PGWs corresponding to the APN and used for the initial attach procedure.
Step S803: The ePDG sends the CoA IP address, which is assigned by the ePDG to the UE, to the UE by using an IKEv2 message.
Step S804: The IPSec tunnel between the UE and the ePDG is established.
Step S805: For the UE supporting the mechanism for selection from a plurality of PGWs, the UE performs PGW selection according to a procedure to be executed.

Specifically, if the UE executes a handover procedure, the UE selects a PGW with an identifier used for a handover procedure, to initiate the IPSec tunnel establishment procedure. Specifically, a PGW which is corresponding to the APN and with a "Handover" indication or an APN indication used for a handover procedure is selected.

If the UE executes an initial attach procedure, the UE selects a PGW with an identifier used for an initial attach procedure to initiate the IPSec tunnel establishment procedure. Specifically, a PGW with an "Initial Attache" indication or an APN indication used for an initial attach procedure is selected.

For an APN, if the UE only receives an identifier of a unique PGW, the UE adopts the identifier of the unique PGW to initiate the IPSec tunnel establishment procedure.
Step S805a: The PGW initiates an authorization authentication request message to the 3GPP AAA server. The authorization authentication request message includes the user identifier of the UE, authorization authentication parameters, the identifier of the PGW, the APN, and the CoA IP of the UE.
Step S805b: For the UE supporting the mechanism for selection from a plurality of PGWs (the 3GPP AAA server obtains information that the UE has this capacity through step S802a), the 3GPP AAA server does not perform a PGW reselection procedure in any case.

For the UE which passes the authorization authentication, the 3GPP AAA server sends user subscription data to the PGW. The user subscription data includes the user identifier of the UE, APN information, default bearer QoS parameters, and the like.

The PGW assigns, based on a request of the UE, an IPv6 address prefix to the UE, and the UE may obtain a home IP address (HoA IP address) according to an automatic configuration protocol.
Step S806: The same as step S705 in Embodiment 3.
Step S807: The same as step S706 in Embodiment 3.
Step S808: The same as step S707 in Embodiment 3.
Step S809: The same as step S708 in Embodiment 3.

The method according to Embodiment 8 of the present invention is used in a case in which a UE supports selection from a plurality of PGWs. A UE sends indication information that the UE supports selection from a plurality of PGWs to a 3GPP AAA server, the 3GPP AAA server identifies a PGW according to a service procedure, to indicate procedure types for which PGWs can be used; and forwards, to the UE, an identifier of the PGW and a request type indication used for indicating a procedure type for which the PGW can be used. The UE performs PGW reselection according to a currently executed procedure, to select a PGW which can be used for a type of the procedure currently executed by the UE. In this way, a dynamic adjustment of a PGW can be implemented in an untrusted access network, and subsequent initiation of an unnecessary PGW reselection procedure is avoided.

Corresponding to the methods for selecting a PDN gateway PGW provided by Embodiment 5 to Embodiment 8 of the present invention, embodiments of the present invention further provide a 3GPP AAA server and a user equipment UE.

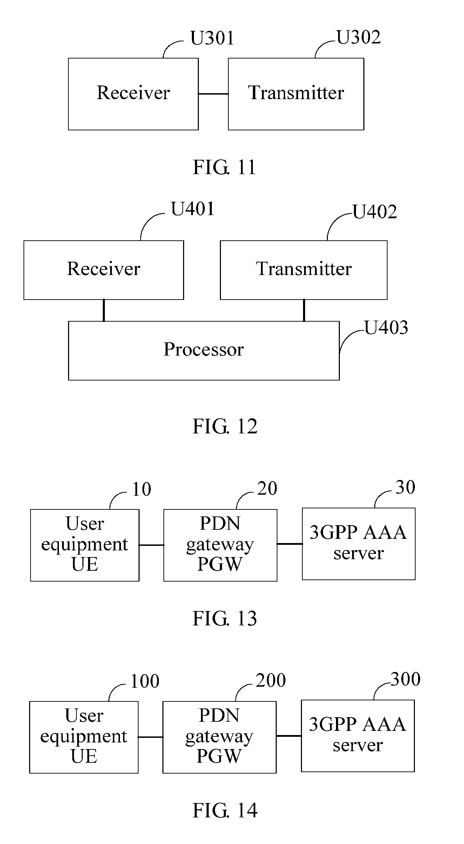

FIG. 11 is a structural diagram of a 3GPP AAA server according to Embodiment 2 of the present invention. As shown in FIG. 11, the 3GPP AAA server may include a receiver U301 and a transmitter U302.

The receiver U301 is configured to receive indication information that a user equipment UE supports selection from a plurality of PGWs, where the indication information is used for indicating that the UE can select a PGW according to an executed procedure.

The transmitter U302 is configured to send an identifier of a PGW and a request type indication to the UE, where the request type indication is used for indicating a procedure type for which the PGW can be used.

After receiving indication information that a user equipment UE supports selection from a plurality of PGWs, the 3GPP AAA server according to Embodiment 2 of the present invention identifies a PGW according to a service procedure, to indicate procedure types for which PGWs can be used; and forwards, to the UE, an identifier of the PGW and a request type indication used for indicating a procedure type for which the PGW can be used. In this way, the UE may select a corresponding PGW according to a currently executed procedure and with reference to the identifier to perform reselection. In this way, a dynamic adjustment of a PGW can be implemented in a trusted or untrusted access network, and subsequent initiation of an unnecessary PGW reselection procedure is avoided.

It should be noted that the PGW is a dynamic PGW included in user subscription data, and the request type indication is used for indicating a handover procedure type; or the PGW is a static PGW included in user subscription data, and the request type indication is used for indicating a handover procedure type; or the PGW is a PGW selected according to operator configuration information, and the request type indication is used for indicating an initial attach procedure type; or the PGW is a static PGW included in user subscription data, and the request type indication is used for indicating an initial attach type.

Specifically, the PGW selected according to the operator configuration information may be a PGW nearest to the UE or a PGW with lowest load.

The PGW nearest to the UE is the PGW which is nearest to the UE and selected based on position relationships, which are by determined according to a care-of address CoA IP of the UE and identifier information of a plurality of PGWs, between the UE and the plurality of PGWs.

An embodiment of the present invention further provides a user equipment UE. FIG. 12 is a structural diagram of the user equipment UE according to the embodiment of the present invention. As shown in FIG. 12, the user equipment UE may include: a transmitter U401, a receiver U402, and a processor U403.

The transmitter U401 is configured to send indication information that the UE supports selection from a plurality of PGWs, where the indication information is used for indicating that the UE can select a PGW according to an executed procedure.

The receiver U402 is configured to receive an identifier of a PGW and a request type indication, where the request type indication is used for indicating a procedure type for which the PGW can be used.

The processor U403 is configured to select the PGW when a type of a procedure executed by the UE is the procedure type indicated by the request type indication.

The UE according to the embodiment of the present invention sends indication information that the UE supports selection from a plurality of PGWs to a 3GPP AAA server, where the indication information is used for indicating that the UE can select a PGW according to an executed procedure; the 3GPP AAA server sends, to the UE, an identifier of a PGW and an request type indication used for indicating a procedure type for which the PGW can be used; and the UE performs PGW reselection according to a currently executed procedure, to select a PGW which can be used for a type of the procedure currently executed by the UE. In this way, a dynamic adjustment of a PGW can be implemented in a trusted or untrusted access network, and subsequent initiation of an unnecessary PGW reselection procedure is avoided.

It should be noted that the request type indication is used for indicating a handover procedure type; or the request type indication is used for indicating an initial attach type.

An embodiment of the present invention further provides a system for selecting a PDN gateway PGW. FIG. 13 is a structural diagram of the system for selecting a PDN gateway PGW according to the embodiment of the present invention. As shown in FIG. 13, the system includes: a user equipment UE 10, a PDN gateway PGW 20, and a 3rd Generation Partnership Project Authentication, Authorization, and Accounting 3GPP AAA server 30.

The PGW 20 is configured to determine a request type indication, where the request type indication is used for indicating a type of a procedure executed by the user equipment UE or is used for indicating whether an IP address is preserved, and the request type indication is used for the 3GPP AAA server to select a target PGW; and send the request type indication to the 3GPP AAA server 30.

The 3GPP AAA server 30 is configured to receive the request type indication sent by the PGW 20; and select the target PGW according to the request type indication.

In the system according to Embodiment 1 of the present invention, a PGW determines a request type indication according to a procedure currently executed by a UE, where the request type indication is used for indicating a type of a procedure executed by the user equipment UE or is used for indicating whether an IP address is preserved, and sends the request type indication to a 3GPP AAA server, so as to instruct the 3GPP AAA server to select a target PGW. In this way, the 3GPP AAA server can determine, according to the request type indication, the procedure currently executed by the UE, and decide, with reference to the procedure executed by the UE, that PGW reselection is to be performed and obtain an identifier of the target PGW needed for the reselection. In this way, a dynamic adjustment of a PGW can be implemented in a trusted or untrusted access network, and an unnecessary PGW reselection procedure is avoided.

Preferably, the selecting, by the 3GPP AAA server 30, the target PGW according to the request type indication includes: when the request type indication is used for indicating that the type of the procedure executed by the UE is a handover procedure, and an identifier of a dynamic PGW included in user subscription data delivered by a home subscriber server HSS is different from an identifier of the PGW, selecting the dynamic PGW as the target PGW; or when the request type indication is used for indicating that the IP address is preserved, and an identifier of a dynamic PGW included in user subscription data delivered by a home subscriber server HSS is different from an identifier of the PGW, selecting the dynamic PGW as the target PGW.

Preferably, the selecting, by the 3GPP AAA server 30, the target PGW according to the request type indication includes: when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

Preferably, the selecting a PGW nearest to the UE as the target PGW includes: determining position relationships between the UE and a plurality of PGWs according to a care-of address CoA IP of the UE and identifier information of the plurality of PGWs, and selecting the PGW nearest to the UE.

Preferably, the 3GPP AAA server 30 is further configured to send the target PGW to a home subscriber server HSS when the target PGW is different from the PGW.

Preferably, the 3GPP AAA server 30 is further configured to send a PGW reselection indication and an identifier of the target PGW to the PGW when the target PGW is different from the PGW.

Preferably, the PGW 20 is configured to receive a request message, where the request message includes an IPSec tunnel establishment request message sent by the user equipment UE U10 or a session establishment request message sent by an access network device; and determine the request type indication according to whether the request message carries a handover indication or the IP address of the UE.

Preferably, the determining, by the PGW 20, the request type indication according to whether the request message carries a handover indication or the IP address of the UE 10 includes: when the request message carries the IP address of the UE or carries the handover indication, setting a value of the request type indication to handover; or when the request message does not carry the IP address of the UE or does not carry the handover indication, setting a value of the request type indication to initial attach or initial request; or when the request message carries the IP address of the UE or carries the handover indication, setting a value of the request type indication to IP address preservation; or when the request message does not carry the IP address of the UE or does not carry the handover indication, setting a value of the request type indication to IP address un-preservation.

Preferably, the PGW 20 is further configured to receive a PGW reselection indication and an identifier of the target PGW which are sent by the 3GPP AAA server 30; and send the identifier of the target PGW to the UE 10.

Embodiment 2 of the present invention further provides a system for selecting a PDN gateway PGW in a case in which a UE supports selection from a plurality of PGWs. FIG. 14 is a structural diagram of the system for selecting a PDN gateway PGW according to Embodiment 2 of the present invention. As shown in FIG. 14, the system includes: a user equipment UE 100, a PDN gateway PGW 200, and a 3rd Generation Partnership Project Authentication, Authorization, and Accounting 3GPP AAA server 300.

The UE 100 is configured to send indication information that the UE supports selection from a plurality of PGWs, where the indication information is used for indicating that the UE 100 can select a PGW according to an executed procedure.

The 3GPP AAA server 300 is configured to receive the indication information that the UE 100 supports selection from a plurality of PGWs; and send an identifier of a PGW and a request type indication to the UE 100, where the request type indication is used for indicating a procedure type for which the PGW can be used.

The UE 100 is configured to receive the identifier of the PGW and the request type indication; and select the PGW when a type of the procedure executed by the UE 100 is the procedure type indicated by the request type indication.

The system according to the embodiment of the present invention is used in a case in which a UE supports selection from a plurality of PGWs. A UE sends indication information that the UE supports selection from a plurality of PGWs to a 3GPP AAA server, where the indication information is used for indicating that the UE can select a PGW according to an executed procedure; the 3GPP AAA server sends, to the UE, an identifier of a PGW and an request type indication used for indicating a procedure type for which the PGW can be used; and the UE performs PGW reselection according to a currently executed procedure, to select a PGW which can be used for a type of the procedure currently executed by the UE. In this way, a dynamic adjustment of a PGW can be implemented in a trusted or untrusted access network, and subsequent initiation of an unnecessary PGW reselection procedure is avoided.

Preferably, the PGW is a dynamic PGW included in user subscription data, and the request type indication is used for indicating a handover procedure type; or the PGW is a static PGW included in user subscription data, and the request type indication is used for indicating a handover procedure type; or the PGW is a PGW selected according to operator configuration information, and the request type indication is used for indicating an initial attach procedure type; or the PGW is a static PGW included in user subscription data, and the request type indication is used for indicating an initial attach type.

Preferably, the PGW selected according to the operator configuration information is a PGW nearest to the UE 100 or a PGW with lowest load.

Preferably, the PGW nearest to the UE 100 is the PGW which is nearest to the UE 100 and selected based on position relationships, which are determined according to a care-of address CoA IP of the UE 100 and identifier information of a plurality of PGWs, between the UE 100 and the plurality of PGWs.

A person skilled in the art may understand clearly that the technology in the embodiments of the present invention may be implemented through software plus a necessary universal hardware platform. Base on such an understanding, the technical solutions in the embodiments of the present invention or the part contributing to the prior art may be substantially embodied in the form of a software product. The computer software product may be stored in storage media such as a ROM/RAM, a magnetic disk, and an optical disc, and include several instructions for instructing a computer device (which may be a personal computer, a server, or a network device, and the like) to execute the methods described in the embodiments of the present invention or in some parts of the embodiments of the present invention.

The embodiments in this specification are all described in a progressive manner; for similar parts of the embodiments, reference may be made between the embodiments, and the description of each embodiment focuses on a difference between the embodiment and other embodiments. The system embodiments are briefly described because they are basically similar to the method embodiments, and reference may be made to the method embodiments for a related part.

The implementation manners of the present invention described in the foregoing are not intended to limit the protection scope of the present invention. Any modification, equivalent replacement, and improvement made without departing from the spirit and principle of the present invention shall all fall within the protection scope of the present invention.

## Claims

1. A method for selecting a PDN gateway PGW, wherein the method comprises:
receiving, by a 3rd Generation Partnership Project Authentication, Authorization, and Accounting 3GPP AAA server, a request type indication sent by a PDN gateway PGW, wherein the request type indication is used for indicating a type of a procedure executed by a user equipment UE or is used for indicating whether an IP address is preserved; and
selecting, by the 3GPP AAA server, a target PGW according to the request type indication.

2. The method according to claim 1, wherein the selecting a target PGW according to the request type indication comprises:
when the request type indication is used for indicating that the type of the procedure executed by the UE is a handover procedure, and an identifier of a dynamic PGW comprised in user subscription data delivered by a home subscriber server HSS is different from an identifier of the PGW, selecting the dynamic PGW as the target PGW; or
when the request type indication is used for indicating that the IP address is preserved, and an identifier of a dynamic PGW comprised in user subscription data delivered by a home subscriber server HSS is different from an identifier of the PGW, selecting the dynamic PGW as the target PGW.

3. The method according to claim 1, wherein the selecting a target PGW according to the request type indication comprises:
when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or
when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

4. The method according to claim 3, wherein the selecting a PGW nearest to the UE as the target PGW comprises:
determining position relationships between the UE and a plurality of PGWs according to a care-of address CoA IP of the UE and identifier information of the plurality of PGWs, and selecting the PGW nearest to the UE.

5. The method according to claim 3 or 4, wherein the method further comprises:
when the target PGW is different from the PGW, sending, by the 3GPP AAA server, the target PGW to a home subscriber server HSS.

6. The method according to any one of claims 1to5, wherein the method further comprises:
when the target PGW is different from the PGW, sending a PGW reselection indication and an identifier of the target PGW to the PGW.

7. A method for selecting a PDN gateway PGW, wherein the method comprises:
determining, by a PDN gateway PGW, a request type indication, wherein the request type indication is used for indicating a type of a procedure executed by a user equipment UE or is used for indicating whether an IP address is preserved, and the request type indication is used for a 3rd Generation Partnership Project Authentication, Authorization, and Accounting 3GPP AAA server to select a target PGW; and
sending, by the PGW, the request type indication to the 3GPP AAA server.

8. The method according to claim 7, wherein the method further comprises:
receiving, by the PGW, a request message, wherein the request message comprises an IPSec tunnel establishment request message sent by the UE or a session establishment request message sent by an access network device; and
the determining, by a PGW, a request type indication comprises:
determining, by the PGW, the request type indication according to whether the request message carries a handover indication or an IP address of the UE.

9. The method according to claim 8, wherein the determining, by the PGW, the request type indication according to whether the request message carries a handover indication or the IP address of the UE comprises:
when the request message carries the IP address of the UE or carries the handover indication, setting a value of the request type indication to handover; or
when the request message does not carry the IP address of the UE or does not carry the handover indication, setting a value of the request type indication to initial attach or initial request; or
when the request message carries the IP address of the UE or carries the handover indication, setting a value of the request type indication to IP address preservation; or
when the request message does not carry the IP address of the UE or does not carry the handover indication, setting a value of the request type indication to IP address un-preservation.

10. The method according to any one of claims 7 to 9, further comprising:
receiving, by the PGW, a PGW reselection indication and an identifier of the target PGW which are sent by the 3GPP AAA server, and sending the identifier of the target PGW to the UE.

11. A method for selecting a PDN gateway PGW, wherein the method comprises:
receiving, by a 3rd Generation Partnership Project Authentication, Authorization, and Accounting 3GPP AAA server, indication information that a user equipment UE supports selection from a plurality of PDN gateways PGWs, wherein the indication information is used for indicating that the UE can select a PGW according to an executed procedure; and
sending an identifier of a PGW and a request type indication to the UE, wherein the request type indication is used for indicating a procedure type for which the PGW can be used.

12. The method according to claim 11, wherein
the PGW is a dynamic PGW comprised in user subscription data, and the request type indication is used for indicating a handover procedure type; or
the PGW is a static PGW comprised in user subscription data, and the request type indication is used for indicating a handover procedure type; or
the PGW is a PGW selected according to operator configuration information, and the request type indication is used for indicating an initial attach procedure type; or
the PGW is a static PGW comprised in user subscription data, and the request type indication is used for indicating an initial attach type.

13. The method according to claim 12, wherein the PGW selected according to the operator configuration information is:
a PGW nearest to the UE; or
a PGW with lowest load.

14. The method according to claim 13, wherein the PGW nearest to the UE is:
the PGW which is nearest to the UE and selected based on position relationships, which are determined according to a care-of address CoA IP of the UE and identifier information of a plurality of PGWs, between the UE and the plurality of PGWs.

15. A method for selecting a PDN gateway PGW, wherein the method comprises:
sending, by a user equipment UE, indication information that the UE supports selection from a plurality of PDN gateways PGWs, wherein the indication information is used for indicating that the UE can select a PGW according to an executed procedure;
receiving, by the UE, an identifier of a PGW and a request type indication, wherein the request type indication is used for indicating a procedure type for which the PGW can be used; and
when a type of a procedure executed by the UE is the procedure type indicated by the request type indication, selecting the PGW.

16. The method according to claim 15, wherein
the request type indication is used for indicating a handover procedure type; or
the request type indication is used for indicating an initial attach type.

17. A 3rd Generation Partnership Project Authentication, Authorization, and Accounting 3GPP AAA server, wherein the 3rd Generation Partnership Project Authentication, Authorization, and Accounting 3GPP AAA server comprises:
a receiver, configured to receive a request type indication sent by a PDN gateway PGW, wherein the request type indication is used for indicating a type of a procedure executed by a user equipment UE or is used for indicating whether an IP address is preserved; and
a processor, configured to select a target PGW according to the request type indication.

18. The 3rd Generation Partnership Project Authentication, Authorization, and Accounting 3GPP AAA server according to claim 17, wherein the selecting, by a processor, a target PGW according to the request type indication comprises:
when the request type indication is used for indicating that the type of the procedure executed by the UE is a handover procedure, and an identifier of a dynamic PGW comprised in user subscription data delivered by a home subscriber server HSS is different from an identifier of the PGW, selecting the dynamic PGW as the target PGW; or
when the request type indication is used for indicating that the IP address is preserved, and an identifier of a dynamic PGW comprised in user subscription data delivered by a home subscriber server HSS is different from an identifier of the PGW, selecting the dynamic PGW as the target PGW.

19. The 3rd Generation Partnership Project Authentication, Authorization, and Accounting 3GPP AAA server according to claim 17, wherein the selecting, by the processor, a target PGW according to the request type indication comprises:
when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or
when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

20. The 3rd Generation Partnership Project Authentication, Authorization, and Accounting 3GPP AAA server according to claim 19, wherein the selecting, by the processor, a PGW nearest to the UE as the target PGW comprises:
determining position relationships between the UE and a plurality of PGWs according to a care-of address CoA IP of the UE and identifier information of the plurality of PGWs, and selecting the PGW nearest to the UE.

21. The 3rd Generation Partnership Project Authentication, Authorization, and Accounting 3GPP AAA server according to claim 19 or 20, wherein the 3GPP AAA server further comprises:
a first transmitter, configured to send the target PGW to a home subscriber server HSS when the target PGW is different from the PGW.

22. The 3rd Generation Partnership Project Authentication, Authorization, and Accounting 3GPP AAA server according to any one of claims 17 to 21, wherein the 3GPP AAA server further comprises:
a second transmitter, configured to send a PGW reselection indication and an identifier of the target PGW to the PGW when the target PGW is different from the PGW.

23. A PDN gateway PGW, wherein the PDN gateway PGW comprises:
a processor, configured to determine a request type indication, wherein the request type indication is used for indicating a type of a procedure executed by a user equipment UE or is used for indicating whether an IP address is preserved, and the request type indication is used by a 3rd Generation Partnership Project Authentication, Authorization, and Accounting 3GPP AAA server to select a target PGW; and
a transmitter, configured to send the request type indication to the 3GPP AAA server.

24. The PDN gateway PGW according to claim 23, wherein the PGW further comprises:
a first receiver, configured to receive a request message, wherein the request message comprises an IPSec tunnel establishment request message sent by the UE or a session establishment request message sent by an access network device; and
the determining, by the processor, a request type indication comprises: determining the request type indication according to whether the request message carries a handover indication or an IP address of the UE.

25. The PDN gateway PGW according to claim 24, wherein the determining, by the processor, the request type indication according to whether the request message carries a handover indication or an IP address of the UE comprises:
when the request message carries the IP address of the UE or carries the handover indication, setting a value of the request type indication to handover; or
when the request message does not carry the IP address of the UE or does not carry the handover indication, setting a value of the request type indication to initial attach or initial request; or
when the request message carries the IP address of the UE or carries the handover indication, setting a value of the request type indication to IP address preservation; or
when the request message does not carry the IP address of the UE or does not carry the handover indication, setting a value of the request type indication to IP address un-preservation.

26. The PDN gateway PGW according to any one of claims 23 to 25, wherein the PDN gateway PGW further comprises:
a second receiver, configured to receive a PGW reselection indication and an identifier of the target PGW which are sent by the 3GPP AAA server; and
the transmitter is further configured to send the identifier of the target PGW to the UE.

27. A 3rd Generation Partnership Project Authentication, Authorization, and Accounting 3GPP AAA server, wherein the 3rd Generation Partnership Project Authentication, Authorization, and Accounting 3GPP AAA server comprises:
a receiver, configured to receive indication information that a user equipment UE supports selection from a plurality of PGWs, wherein the indication information is used for indicating that the UE can select a PGW according to an executed procedure; and
a transmitter, configured to send an identifier of a PGW and a request type indication to the UE, wherein the request type indication is used for indicating a procedure type for which the PGW can be used.

28. The 3rd Generation Partnership Project Authentication, Authorization, and Accounting 3GPP AAA server according to claim 27, wherein
the PGW is a dynamic PGW comprised in user subscription data, and the request type indication is used for indicating a handover procedure type; or
the PGW is a static PGW comprised in user subscription data, and the request type indication is used for indicating a handover procedure type; or
the PGW is a PGW selected according to operator configuration information, and the request type indication is used for indicating an initial attach procedure type; or
the PGW is a static PGW comprised in user subscription data, and the request type indication is used for indicating an initial attach type.

29. The 3rd Generation Partnership Project Authentication, Authorization, and Accounting 3GPP AAA server according to claim 28, wherein the PGW selected according to the operator configuration information is:
a PGW nearest to the UE; or
a PGW with lowest load.

30. The 3rd Generation Partnership Project Authentication, Authorization, and Accounting 3GPP AAA server according to claim 29, wherein the PGW nearest to the UE is:
the PGW which is nearest to the UE and selected based on position relationships, which are determined according to a care-of address CoA IP of the UE and identifier information of a plurality of PGWs, between the UE and the plurality of PGWs.

31. A user equipment UE, wherein the user equipment UE comprises:
a transmitter, configured to send indication information that the UE supports selection from a plurality of PGWs, wherein the indication information is used for indicating that the UE can select a PGW according to an executed procedure;
a receiver, configured to receive an identifier of a PGW and a request type indication, wherein the request type indication is used for indicating a procedure type for which the PGW can be used; and
a processor, configured to select the PGW when a type of a procedure executed by the UE is the procedure type indicated by the request type indication.

32. The user equipment UE according to claim 31, wherein
the request type indication is used for indicating a handover procedure type; or
the request type indication is used for indicating an initial attach type.

33. A system for selecting a PDN gateway PGW, wherein the system comprises: a user equipment UE, a PDN gateway PGW, and a 3rd Generation Partnership Project Authentication, Authorization, and Accounting 3GPP AAA server, wherein
the PGW is configured to determine a request type indication, wherein the request type indication is used for indicating a type of a procedure executed by the user equipment UE or is used for indicating whether an IP address is preserved, and the request type indication is used by the 3GPP AAA server to select a target PGW; and send the request type indication to the 3GPP AAA server; and
the 3GPP AAA server is configured to receive the request type indication sent by the PGW; and select the target PGW according to the request type indication.

34. The system according to claim 33, wherein the selecting, by the 3GPP AAA server, the target PGW according to the request type indication comprises:
when the request type indication is used for indicating that the type of the procedure executed by the UE is a handover procedure, and an identifier of a dynamic PGW comprised in user subscription data delivered by a home subscriber server HSS is different from an identifier of the PGW, selecting the dynamic PGW as the target PGW; or
when the request type indication is used for indicating that the IP address is preserved, and an identifier of a dynamic PGW comprised in user subscription data delivered by a home subscriber server HSS is different from an identifier of the PGW, selecting the dynamic PGW as the target PGW.

35. The system according to claim 33, wherein the selecting, by the 3GPP AAA server, the target PGW according to the request type indication comprises:
when the request type indication is used for indicating that the type of the procedure executed by the UE is an initial attach or initial request, and it is determined according to operator configuration information that a PGW is to be reselected, selecting a PGW nearest to the UE as the target PGW, or selecting a PGW with lowest load as the target PGW; or
when the request type indication is used for indicating that the IP address is not preserved, and it is determined according to operator configuration information that a PGW is to be reselected, selecting a PGW nearest to the UE as the target PGW, or selecting a PGW with lowest load as the target PGW.

36. The system according to claim 35, wherein the selecting a PGW nearest to the UE as the target PGW comprises:
determining position relationships between the UE and a plurality of PGWs according to a care-of address CoA IP of the UE and identifier information of the plurality of PGWs, and selecting the PGW nearest to the UE.

37. The system according to claim 35 or 36, wherein the 3GPP AAA server is further configured to send the target PGW to a home subscriber server HSS when the target PGW is different from the PGW.

38. The system according to any one of claims 33 to 37, wherein the 3GPP AAA server is further configured to send a PGW reselection indication and an identifier of the target PGW to the PGW when the target PGW is different from the PGW.

39. The system according to claim 33, wherein the PGW is configured to receive a request message, wherein the request message comprises an IPSec tunnel establishment request message sent by the user equipment UE or a session establishment request message sent by an access network device; and determine the request type indication according to whether the request message carries a handover indication or the IP address of the UE.

40. The system according to claim 39, wherein the determining, by the PGW, the request type indication according to whether the request message carries a handover indication or the IP address of the UE comprises:
when the request message carries the IP address of the UE or carries the handover indication, setting a value of the request type indication to handover; or
when the request message does not carry the IP address of the UE or does not carry the handover indication, setting a value of the request type indication to initial attach or initial request; or
when the request message carries the IP address of the UE or carries the handover indication, setting a value of the request type indication to IP address preservation; or
when the request message does not carry the IP address of the UE or does not carry the handover indication, setting a value of the request type indication to IP address un-preservation.

41. The system according to claim 33, 39, or 40, wherein the PGW is further configured to receive a PGW reselection indication and an identifier of the target PGW which are sent by the 3GPP AAA server; and send the identifier of the target PGW to the UE.

42. A system for selecting a PDN gateway PGW, wherein the system comprises: a user equipment UE, a PDN gateway PGW, and a 3rd Generation Partnership Project Authentication, Authorization, and Accounting 3GPP AAA server, wherein
the UE is configured to send indication information that the UE supports selection from a plurality of PGWs, wherein the indication information is used for indicating that the UE can select a PGW according to an executed procedure;
the 3GPP AAA server is configured to receive the indication information that the UE supports selection from a plurality of PGWs; send an identifier of a PGW and a request type indication to the UE, wherein the request type indication is used for indicating a procedure type for which the PGW can be used; and
the UE is configured to receive the identifier of the PGW and the request type indication; and select the PGW when a type of the procedure executed by the UE is the procedure type indicated by the request type indication.

43. The system according to claim 42, wherein
the PGW is a dynamic PGW comprised in user subscription data, and the request type indication is used for indicating a handover procedure type; or
the PGW is a static PGW comprised in user subscription data, and the request type indication is used for indicating a handover procedure type; or
the PGW is a PGW selected according to operator configuration information, and the request type indication is used for indicating an initial attach procedure type; or
the PGW is a static PGW comprised in user subscription data, and the request type indication is used for indicating an initial attach type.

44. The system according to claim 43, wherein the PGW selected according to the operator configuration information is:
a PGW nearest to the UE; or
a PGW with lowest load.

45. The system according to claim 44, wherein the PGW nearest to the UE is:
the PGW which is nearest to the UE and selected based on position relationships, which are determined according to a care-of address CoA IP of the UE and identifier information of a plurality of PGWs, between the UE and the plurality of PGWs.
